# FASCICULE DE BREVET EUROPEEN

(11) **EP 2 484 076 B1**
(45) Date de publication et mention de la délivrance du brevet: **14.04.2021**
(21) Numéro de dépôt: 10754760.6
(22) Date de dépôt: 21.09.2010
(51) Int. Cl.: H04L 9/32, H04L 29/06, G06Q 20/02, G06Q 20/32, G06Q 50/18

(54) **SYSTEME ET PROCEDE DE GESTION DE SESSIONS DE CORRESPONDANCE ELECTRONIQUE SECURISEE**
SYSTEM UND VERFAHREN ZUR VERWALTUNG SICHERER ELEKTRONISCHER KORRESPONDENZSICHERUNGEN
SYSTEM AND METHOD FOR THE MANAGEMENT OF SECURE ELECTRONIC CORRESPONDENCE SESSIONS

(30) Priorité: 30.09.2009 FR 0956819
(43) Date de publication de la demande: 08.08.2012
(73) Titulaire: Trustcorp S.A., 8008 Strassen (LU)
(72) Inventeur: BLOT-LEFEVRE, Eric, F-92200 Neuilly-sur-Seine (FR)
(74) Mandataire: Marks & Clerk France
(86) Numéro de dépôt international: PCT/EP2010/063874
(87) Numéro de publication internationale: WO 2011/039076

(56) Documents cités:
- WO-A1-2008/132248
- FR-A1- 2 900 010
- US-A1- 2003 036 999
- US-B1- 6 199 052
- cecurity.com: "Solutions d'e-Archivage Légal", , 28 février 2005 (2005-02-28), XP002578421, Extrait de l'Internet: URL:http://www.cecurity.com/site/Documenta tion/Cecurity_Presentation_des_solutions_C ecurity.com.pdf [extrait le 2010-04-13]

## Description

La présente invention appartient au domaine des systèmes de correspondances électroniques sécurisées. Plus précisément, elle s'applique à la vérification des attributs qui permettent de garantir la valeur probante de telles correspondances. Les systèmes juridiques européens reconnaissent maintenant qu'un document électronique dont l'auteur est identifiable de manière sûre et qui est conservé dans des conditions qui permettent d'en garantir l'intégrité a la même valeur probante que l'écrit sur support papier (Article 1316 et suivants du Code civil français, par exemple). Cependant, les systèmes les plus répandus de production, tels qu'un traitement de texte générant un document au format PDF (Portable Digital File) et d'échange (messagerie électronique sur Internet) de documents électroniques ne permettent aujourd'hui de garantir ni l'identité de leur auteur ni leur intégrité. Le problème concerne à la fois les correspondances privées entre particuliers ou entre un particulier et une entreprise et une institution et les correspondances entre entreprises et administrations ou entre une entreprise ou une administration et ses clients ou ses usagers. Dans ce dernier cas, les flux de documents peuvent être particulièrement importants (plusieurs dizaines de millions de factures par mois sont adressées aux clients d'EDF, de GDF Suez, d'Orange). La fabrication et l'expédition de ces documents sont donc automatisées dans des chaînes de production qui font nécessairement intervenir de nombreux opérateurs. Si l'on veut garantir l'identité du document envoyé et archivé à celui produit originellement, il est donc nécessaire d'assurer une traçabilité de bout en bout de toutes ces opérations et une vérification que les opérateurs ont effectué les opérations qu'ils devaient exécuter. Cela vaut pour une chaîne de production de documents papier ou de documents électroniques. Par ailleurs, en cas d'envoi électronique, pour que les documents ainsi envoyés puissent être considérés comme valablement adressés, il faut à la fois que ces documents portent l'identification de l'expéditeur et que celui-ci se soit assuré de l'identité des destinataires. Des solutions partielles ont été apportées au problème de la valeur probante des documents électroniques échangés par voie électronique. En particulier, si l'expéditeur dispose d'un certificat de signature électronique délivré dans des conditions prescrites et dont la validité est vérifiée par une autorité de certification, son identité d'auteur d'un document électronique sur lequel il aura apposé ledit certificat sera reconnue comme valablement démontrée. Mais les certificats de signature électronique sont encore peu répandus en raison notamment de leur coût élevé et de leur incommodité d'emploi. En outre, cela ne règle pas le problème posé par une chaîne de production de documents faisant intervenir de multiples opérateurs. La demanderesse a déjà déposé des demandes de brevets en France ayant notamment pour but de fournir une note de l'identité d'un expéditeur et de destinataires de documents électroniques permettant de juger la valeur probante des documents échangés entre ces parties. Voir par exemple les demandes déposées sous les numéros FR/06 04 107 et FR/08 02 239.

Les demandes de brevet publiées sous les numéros FR 2900010, WO 2008/132248 et US 2003/036999 sont également connues de l'homme de l'art, mais n'apportent pas de réponse aux points précités.

La présente invention améliore grandement les réponses apportées par ces documents de l'art antérieur au problème évoqué ci-dessus en prévoyant notamment la vérification à l'ouverture d'une session de correspondance électronique sécurisée des attributs de confiance de l'expéditeur, des destinataires et de tous les intervenants dans le chaîne de correspondance électronique sécurisée.

A cet effet, la présente invention divulgue un système de gestion de sessions de correspondance électronique sécurisée entre au moins un utilisateur expéditeur et au moins un utilisateur destinataire, ledit système comprenant au moins un serveur annuaire, au moins un serveur de domiciliation de correspondances électroniques comprenant un bureau privé de gestion pour chaque utilisateur, notamment pour choisir au moins une contrepartie de correspondance, au moins un serveur de traitement desdites correspondances, et au moins un serveur de certification de correspondances électroniques, ledit système étant caractérisé en ce que ledit au moins un serveur de domiciliation comprend en outre au moins un module de gestion de sessions de correspondance électronique comprenant au moins un sous module d'autorisation d'ouverture de session entre un utilisateur et son bureau privé de gestion sous condition de vérification par requête avant ladite ouverture auprès d'au moins un serveur de certification de la validité d'attributs d'identité documentaire dudit utilisateur, de sa contrepartie et des serveurs de traitement des correspondances électroniques.

Avantageusement, ledit sous module d'ouverture de session est apte à exécuter une fonction d'authentification forte d'un utilisateur dudit système par vérification de l'identité d'un code fourni par ledit utilisateur audit serveur de domiciliation avec un secret unique transmis sous deux formes différentes par le serveur de certification, d'une part au serveur de domiciliation et d'autre part audit utilisateur, cette deuxième transmission s'effectuant sur un canal de communication différent de celui par lequel l'utilisateur se connecte au serveur de gestion, la sortie de ladite fonction d'authentification forte conditionnant une poursuite de l'ouverture de la session.

Avantageusement, la dite fonction d'authentification transmet ledit secret au serveur de domiciliation sous forme d'une information calculée à partir dudit secret généré par le serveur de certification et d'au moins une donnée caractéristique de la session en cours d'ouverture créée par le serveur de domiciliation et transmise au serveur de certification.

Avantageusement, ladite information est un numéro d'enrôlement attaché à ladite session et calculée en effectuant le produit dudit secret et d'un numéro d'ordre de la session en cours d'ouverture.

Avantageusement, l'utilisateur expéditeur peut inviter au moins utilisateur destinataire à s'enregistrer sur un serveur de domiciliation proposé dans une liste comprenant au moins un élément.

Avantageusement, le système de l'invention comprend en outre un module d'enregistrement d'utilisateurs invités, ledit module offrant audit utilisateur invité la possibilité de fournir au moins des informations relatives à ses attributs d'identification et d'adressage physique et électronique comportant au moins un numéro de téléphone mobile.

Avantageusement, ledit module d'enregistrement offre en outre à l'utilisateur la possibilité d'adhérer à une convention de correspondance universelle proposée par le serveur de domiciliation choisi et à une convention de correspondance bilatérale proposée par l'utilisateur invitant. Avantageusement, ledit module d'enregistrement propose en outre à l'utilisateur en cours d'enregistrement la fourniture de preuves matérielles de au moins une partie des informations d'identification et d'adressage qu'il a fourni audit module et n'accepte son enregistrement qu'après réception et contrôle de la conformité desdites preuves aux informations fournies audit module.

Avantageusement, le serveur de certification comprend une base de données des signatures électroniques non répudiées des utilisateurs, des opérateurs de domiciliation, des opérateurs de traitement et des opérateurs de certification, ladite base de données étant mise à jour auprès des prestataires émetteurs desdites signatures à un fréquence calculée en fonction d'une statistique de répudiation desdites signatures et d'une statistique de flux de correspondances électroniques.

Avantageusement, ledit module de gestion de sessions comprend en outre un sous module de gestion des remises de correspondance à expédier dans le bureau privé de gestion d'un utilisateur.

Avantageusement, ledit sous module de gestion des remises est apte à refuser une remise de correspondance si un critère de notation du couple expéditeur/destinataire de ladite correspondance est inférieur à un seuil de notation prescrit par l'opérateur de certification.

Avantageusement, ledit sous module de gestion des remises comprend une fonction de création d'un tableau d'ordre de correspondance consolidé regroupant, pour chaque destinataire leurs données validées d'adressage, les références des fichiers validés à expédier, les numéros d'ordre de chaque ligne de correspondance.

Avantageusement, ledit sous module de gestion des remises comprend, en sortie de ladite fonction de création d'un tableau d'ordre de correspondance consolidé, une fonction d'édition d'un journal horodaté de validation de ladite création.

Avantageusement, ledit sous module de gestion des remises comprend, en sortie de ladite fonction de création d'un tableau d'ordre de correspondance consolidé, une fonction d'envoi d'un message au serveur de certification, ledit message comprenant ledit tableau d'ordre de correspondance consolidé, puis une fonction de réception d'un message dudit serveur de certification, ledit message comprenant un tableau d'ordre de correspondance consolidé corrigé et validé par ledit serveur de certification. Avantageusement, ledit sous module de gestion des remises comprend une fonction de gestion de jetons de certification de l'exécution d'opérations de traitement à effectuer sur chaque correspondance électronique. Avantageusement, ladite fonction de gestion de jetons de certification est apte à recevoir lesdits jetons du serveur de certification dans une matrice de valeur probante documentaire au serveur de domiciliation, ladite matrice comprenant tous les jetons nécessaires à la certification des correspondances expédiées ou reçues pendant la session en cours par l'opérateur de certification.

Avantageusement, ladite fonction de gestion de jetons de certification est apte à router les jetons reçus aux opérateurs de traitement.

Avantageusement, ladite fonction de gestion de jetons de certification est apte à recevoir du serveur de certification un message comprenant les jetons de certification des opérations de traitement qui se sont déroulées en conformité avec le cahier des charges de l'opérateur de certification. Avantageusement, ledit module de gestion de sessions comprend en outre un sous module de validation par l'utilisateur ou un mandataire désigné par lui de l'expédition à ses destinataires des correspondances électroniques. Avantageusement, ledit sous module de validation comprend une fonction d'édition d'un journal de validation indiquant la complétude des contrôles effectués avant validation.

Avantageusement, ledit sous module de validation comprend une fonction d'édition d'une table de validation des attributs de confiance de chaque utilisateur destinataire.

Avantageusement, ledit sous module de validation comprend une fonction de scellement des dites correspondances électroniques.

Avantageusement, ledit module de gestion de sessions comprend en outre un sous module de gestion des accusés de réception des correspondances électroniques.

Avantageusement, ledit module de gestion de sessions comprend en outre un sous module de gestion des communications entre utilisateurs dudit système, ledit module étant apte à opérer un choix de chemin de routage sécurisé à partir d'informations relatives au serveur de domiciliation et au serveur de certification auxquels sont abonnés les utilisateurs expéditeurs , les utilisateurs destinataires, les opérateurs de traitement desdites correspondances électroniques et les opérateurs de certification. Avantageusement, ledit sous module de gestion des communications entre utilisateurs dudit système est apte à produire un choix entre un premier type de chemins de routage lorsqu'un expéditeur et un destinataire utilisent un seul opérateur de domiciliation, un seul opérateur de traitement et un seul opérateur de certification, un deuxième type de chemins de routage lorsqu'un expéditeur et un destinataire utilisent aux moins deux serveurs de domiciliation, un seul opérateur de traitement et un seul opérateur de certification, un troisième type de chemins de routage lorsqu'un expéditeur et un destinataire utilisent aux moins deux serveurs de domiciliation différents, au moins deux opérateurs de traitement et un seul opérateur de certification, et un quatrième type de chemins de routage pour des serveurs de certification différents lorsqu'un expéditeur et un destinataire utilisent aux moins deux serveurs de domiciliation différents, au moins deux opérateurs de traitement et au moins deux opérateurs de certification.

La présente invention divulgue également un procédé de gestion de sessions de correspondance électronique sécurisée entre au moins un utilisateur expéditeur et au moins un utilisateur destinataire, ledit procédé comprenant une étape de connexion à au moins un serveur annuaire, au moins une étape de connexion à un serveur de domiciliation de correspondances électroniques, ledit serveur comprenant un bureau privé de gestion pour chaque utilisateur, notamment pour choisir au moins une contrepartie de correspondance, au moins une étape de traitement desdites correspondances, et au moins un étape de connexion du serveur de domiciliation au serveur de certification de correspondances électroniques, ledit système étant caractérisé en ce que ladite étape de connexion au serveur de domiciliation comprend en outre au moins une étape de gestion de sessions de correspondance électronique comprenant au moins une sous étape d'autorisation d'ouverture de session entre un utilisateur et son bureau privé de gestion sous condition de vérification par requête avant ladite ouverture auprès d'au moins un serveur de certification de la validité d'attributs d'identité documentaire dudit utilisateur, de sa contrepartie et des opérateurs des étapes de traitement des correspondances électroniques. Avantageusement, la dite étape de gestion de sessions de correspondance électronique comprend en outre une sous étape de gestion des remises de correspondance à expédier dans le bureau privé de gestion d'un utilisateur. Avantageusement, la dite étape de gestion de sessions de correspondance électronique comprend en outre une sous étape de validation par l'utilisateur ou un mandataire désigné par lui de l'expédition à ses destinataires des correspondances électroniques.

Avantageusement, la dite étape de gestion de sessions de correspondance électronique comprend en outre une sous étape de gestion des communications entre utilisateurs dudit système, ladite sous étape étant apte à opérer un choix de chemin de routage sécurisé à partir d'informations relatives au serveur de domiciliation et au serveur de certification auxquels sont abonnés les utilisateurs expéditeurs , les utilisateurs destinataires, les opérateurs de traitement desdites correspondances électroniques et les opérateurs de certification.

L'invention peut être mise en œuvre sans obliger tous les utilisateurs ayant vocation à s'échanger du courrier à avoir recours à des certificats de signature électronique. Elle permet également de traiter de manière sûre des volumes de documents très élevés sans ajouter des vérifications prenant un temps prohibitif. Les vérifications s'effectuent au contraire en quasi temps réel. L'invention peut enfin être mise en œuvre dans un environnement très hétérogène comprenant des expéditeurs et des destinataires appartenant à des univers professionnels, géographiques, juridiques très différents, et utilisant de nombreux opérateurs dans la chaîne de traitement des documents.

L'invention sera mieux comprise et ses différentes caractéristiques et avantages ressortiront de la description qui suit de plusieurs exemples de réalisation et de ses figures annexées dont :
- La figure 1 représente l'architecture simplifiée d'un système de correspondance électronique sécurisée dans un mode de réalisation de l'invention;
- La figure 2 représente les liens entre les différents acteurs d'un système de correspondance électronique sécurisée dans un mode de réalisation de l'invention;
- La figure 3 définit les jetons de certification utilisés par les traitements d'une session dans un mode de réalisation de l'invention ;
- La figure 4 représente les différents types de session utilisables dans un mode de réalisation de l'invention;
- La figure 5 représente un organigramme des traitements pour mettre en oeuvre une session de type S₀ dans un mode de réalisation de l'invention ;
- La figure 6 représente les flux de données gérés par une session de type S₀ dans un mode de réalisation de l'invention ;
- La figure 7 représente un schéma de principe d'une procédure d'enrôlement mise en œuvre par session de type S₀ dans un mode de réalisation de l'invention ;
- Les figures 8a à 8d représentent des tables utiles à la mise en œuvre d'une session de type S₀ dans un mode de réalisation de l'invention ;
- La figure 9 représente les flux de données gérés par une session de type S₁ dans un mode de réalisation de l'invention ;
- Les figures 10a à 10h représentent des tables utiles à la mise en œuvre d'une session de type S₁ dans un mode de réalisation de l'invention ;
- La figure 11 représente les flux de données gérés par une session de type S₂ dans un mode de réalisation de l'invention ;
- La figure 12 représente les flux de données gérés par une session de type S₃ dans un mode de réalisation de l'invention.

Dans la description, les figures et les revendications, les sigles et abréviations qui figurent dans le tableau ci-dessous ont les significations qui y sont indiquées, à moins qu'une signification différentes soit précisée plus loin dans la description.

| **Sigle** | **Signification** |
|---|---|
| ACK | Acquittement |
| ADR | Adresses utilisateur |
| AEML | Adresse mél |
| AMP | Ampliation |
| ANN | Serveur Annuaire |
| APT | Adresse Postale |
| AR | Accusé de Réception |
| ARC | Archivage |
| BPG | Serveur Bureau Privé de Gestion |
| CCC | Compte Courant de Correspondance |
| CCU | Convention de Correspondance Universelle |
| CMT | Commutation |
| COL | Chambre d'Ordonnancement Légal |
| COM | Serveur Communautaire |
| COOR | Coordonnées d'un utilisateur (adresses et téléphones) |
| CORR | Correspondance bilatérale |
| COMP | Composition d'une correspondance électronique |
| CPA | Composition de l'AR |
| CSS | Code Secret Sécurisé |
| CxC | Communication multi canal (fax /e-mail) |
| D | Destinataire |
| DENO | Dénomination personnelle |
| DOC | Document |
| DOM | Opérateur de domiciliation de correspondance électronique |
| DUP | Duplicata |
| E | Expéditeur |
| EDI | Editique |
| ERP | Enterprise Resource Planning (ou logiciel de gestion des ressources d'une entreprise) |
| FAR | Fichier AR |
| FC | Fichier Contenu (texte du document) |
| FD | Fichier Descriptor décrivant les attributs de la correspondance |
| FDS | Fichier de Données Structuré |
| FGS | Fichier de Gestion Structuré |
| FIO | Fichier d'Ordre |
| FPT | Fichier Poste |
| H1 | Habilitation de remise |
| H2 | Habilitation de validation d'envoi |
| H3 | Habilitation de validation de réception |
| H4 | Habilitation de consultation |
| H5 | Habilitation de remise d'archivage |
| H6 | Habilitation de validation d'archivage |
| HAB | Habilitations |
| IDP | Identité Personnelle |
| IMMA | Immatriculation du document |
| J | Jeton |
| JNA | Journal d'enregistrement et de traçabilité |
| MAR | Membership Application Registration |
| MCIS | Matrice de Connectivité Inter Services |
| MVPD | Matrice de Valeur Probante Documentaire |
| OPEM | Opérateur Mutualisé |
| OPEN | Opérateur National |
| OPET | Opérateur de Traitement |
| OPET-AMP | Opérateur de Traitement chargé de l'Ampliation |
| OPET-CMT | Opérateur de Traitement chargé de la Commutation |
| OPET-COMP | Opérateur de Traitement chargé de la Composition |
| OPET-TRANS | Opérateur de Traitement chargé de la Transmission |
| OPT | Tableau de correspondance d'un opérateur légal |
| ORI | Original |
| PF | Pass File (transfert de fichier inter prestataires) |
| PSC-COR | Prestataire de Services de Certification de Correspondance |
| PSCE | Prestataire de Services de Certification Electronique |
| PSCE-HD | PSCE d'Horodatage |
| PSCE-SE | PSCE de Signature Electronique |
| PSD | Prestataire de Services de Domiciliation |
| RIDD | Relevé d'Identité Documentaire du Destinataire |
| RIDE | Relevé d'Identité Documentaire de l'Expéditeur |
| RTR | Retour du Jeton |
| SPE | Spécimen de document ou d'AR |
| SSC | Shared Services Centre |
| SWO | Switch Out (transfert inter prestataires) |
| TCE | Tableau de Correspondance Expéditeur |
| TCEL | Tableau de Correspondance Expéditeur Légal |
| TECB | Tableau d'Enrôlement de Correspondance Bilatérale |
| TMOB | Numéro de Téléphone Mobile |
| TOCC | Tableau d'Ordre de Correspondance Consolidé |
| TRF | Transfert |
| UTIL | Utilisateur d'un service de correspondance électronique |
| VERS | Versions documentaires |

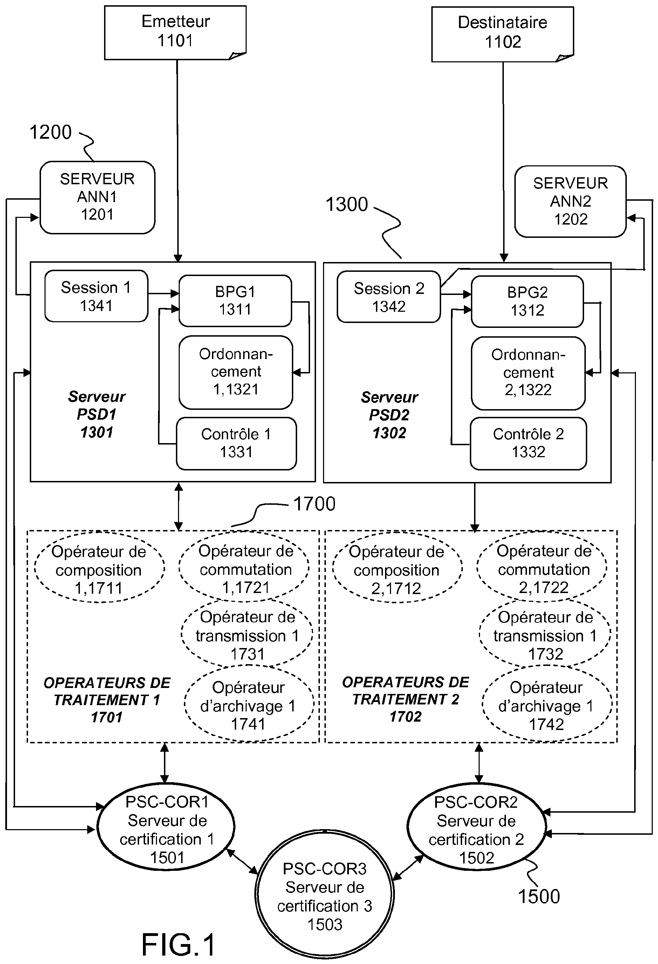

La figure 1 représente l'architecture simplifiée d'un système de correspondance électronique sécurisée dans un mode de réalisation de l'invention.

La dématérialisation des échanges de documents ou correspondances répond à un objectif de gain de productivité. En particulier, le gain potentiel résultant d'une dématérialisation des factures en France a été chiffré à 2% du PIB, soit plus de 40 milliards d'Euros. Cependant, le cahier des charges à respecter pour que cette dématérialisation soit conforme aux prescriptions légales et réglementaires impose la vérification de l'identité de l'émetteur du document et de l'intégrité dudit document. Or, la dématérialisation de la production de millions de documents suppose la mise en place de véritables chaînes industrielles pour produire lesdits documents.

Comme illustré sur le bas de la figure 1, de nouveaux métiers d'opérateurs de traitement (OPET) des documents ou correspondances électroniques 1700 se sont donc créés, dont les principaux sont les opérateurs de composition, les opérateurs de transmission, les opérateurs d'archivage, les opérateurs de commutation bilatérale. Les opérateurs de composition assemblent les documents à partir de fonds de page et de fichiers de données. Les opérateurs de transmission réalisent le routage, postal ou électronique, des documents. Les opérateurs d'archivage conservent les documents pour le compte des expéditeurs ou des destinataires, sous une forme originale ou de copie. Les opérateurs de commutation documentaire enregistrent en partie double les mouvements sur les comptes de correspondance de chaque utilisateur et opérateur de manière à pouvoir vérifier qu'au bout d'un temps paramétrable toute correspondance émise a sa contrepartie en réception. Dans la majorité des cas, l'existence de la contrepartie devra être vérifiée au maximum dans la journée, faute de quoi le courrier expédié sera rejeté par le système.

Il est bien entendu envisageable que tout ou partie de ces opérations de traitement soient réalisé par un même opérateur, par exemple dans un centre de services partagé comme nous le verrons plus loin dans la description. Mais dans des systèmes de correspondance électronique ayant vocation à couvrir des zones géographiques étendues et des systèmes juridiques différents, il est probable qu'au moins deux fonctions doivent être exécutées localement : la fonction d'archivage, pour des raisons légales ou de politique publique et la partie de la transmission relative à la communication multi-canal qui implique l'envoi de fax, l'impression, la mise sous pli et le routage postal qui sont coûteux s'ils sont effectués à longue distance.

Or, pour que la valeur probante d'un document électronique soit équivalente à celle d'un document écrit sur support papier, il est nécessaire de pouvoir garantir tout au long de la vie du document l'identité de l'auteur et l'intégrité de son document. Cette garantie ne peut être établie que si la chaîne de production et d'échange de documents est une chaîne de confiance.

Est représentée sur la figure 1 une architecture simplifiée en mesure d'établir cette chaîne de confiance. Cette architecture comprend quatre types d'entités organisationnelles, chaque entité gérant des serveurs informatiques, bases de données et logiciels propres à chaque type, lesdites entités étant reliées entre elles par un ou plusieurs réseaux de communication qui peuvent être le réseau public ou des réseaux privés sur lequel peuvent être mise en œuvre des protocoles de communication standard ou spécialisés:
- Un premier type d'entité est constitué par des ensembles d'utilisateurs « UTIL » émetteurs 1101 et destinataires 1102 de correspondances, chaque ensemble d'utilisateurs étant réuni par une cause faisant que certaines de leurs données d'identification sont disponibles sur un même serveur Annuaire ou ANN 1200, 1201, 1202;
- Un deuxième type d'entité est constitué par des « Prestataires de Services de Domiciliation de Correspondance», PSD, 1300, 1301, 1302 ;
- Un troisième type d'entité est constitué par les « Opérateurs de Traitement» (OPET) de correspondances électroniques, 1700, 1701, 1702 ;
- Un quatrième type d'entité est constitué par des « Prestataires de Services de Certification de Correspondance» (PSC-COR), 1500.

Nous explicitons d'abord les entités du premier type. Pour faciliter la compréhension, l'architecture est présentée avec deux utilisateurs, un utilisateur expéditeur 1110 et un utilisateur destinataire 1120 appartenant à deux annuaires ANN différents, 1201 et 1202. L'architecture est donc dupliquée sur la figure 1. Le système de l'invention est configuré pour gérer les correspondances électroniques entre ces utilisateurs, comme explicité plus loin dans la description.

Des ensembles d'utilisateurs regroupés sur un même Annuaire peuvent être constituées pour des raisons diverses :
- Un tel ensemble peut être constitué par tous les salariés d'une entreprise de par le monde (ou par certaines catégories de ces salariés : cadres dirigeants ; chercheurs d'une discipline donnée ; commerçants chargés de la vente d'un produit donné, etc...) ;
- Les administrés d'une collectivité territoriale peuvent naturellement constituer un tel ensemble ;
- Une grande entreprise peut vouloir agréger autour d'elle ses fournisseurs en mettant à leurs dispositions un extranet leur donnant accès à des informations réservées et leur imposant par ailleurs de fournir leurs documents (propositions, factures, manuels utilisateurs, etc...) selon certaines normes ;
- Une chaîne de magasins généralistes ou spécialisés, une banque de détail, offrent en général à leurs clients l'accès à espace réservé sur leur site internet ;
- Un fournisseur d'accès Internet, qui fournit en général un service de messagerie standard.

A certains égards, ces ensembles d'utilisateurs réunis par un point commun constituent des communautés. On voit que cette notion peut avoir des acceptions différentes selon le contexte : une communauté peut regrouper des personnes physiques et des personnes morales, elles-mêmes représentées par des personnes physiques qui doivent avoir les pouvoirs pour ce faire, à partir du moment où les documents produits engagent la personne morale que cette personne physique représente. Il résulte également de la nature même des communautés que nous venons de décrire qu'une même personne physique et une même personne morale peut appartenir à plusieurs communautés différentes. Une communauté définit des règles de gestion pour enregistrer ses adhérents qui peuvent devenir utilisateurs des services de la communauté et, éventuellement, pour que lesdits membres puissent inviter des personnes extérieures à leur communauté à les rejoindre. La procédure d'enregistrement fait nécessairement intervenir des échanges non électroniques. En résumé, il s'agit de vérifier les attributs d'identification, d'adressage et d'authentification du futur utilisateur. Un utilisateur enregistré a donc une identité vérifiée, des adresses postales et électroniques validées et au moins un moyen d'authentification, ces différents attributs étant décrits de manière détaillée dans la suite de la description. Ces données sont stockées dans une base de données qui constitue, dans sa totalité ou en partie, un Annuaire ANN, 1200, 1201, 1202. Pour protéger les données nominatives, il peut être nécessaire de gérer un certain nombre de données de la base (notamment les informations relatives aux modes d'authentification), dans un espace de stockage logiquement voire physiquement distinct de l'Annuaire qui doit être accessible sur le réseau de la communauté.

Ces entités du premier type ne sont pas spécifiques du domaine de la correspondance électronique. Leur objectif premier est différent (économique, social, etc...), le service de correspondance étant accessoire par rapport à cet objectif premier.

En revanche, les Prestataires de Services de Domiciliation de correspondance PSD, 1300 ont pour objectif principal de fournir ce service à leurs clients ou usagers. Ces prestataires PSD mettent à la disposition de leurs clients un Bureau Privé de Gestion (BPG) 1310 qui constitue une zone propre à chaque utilisateur (ou éventuellement à chaque entité, lorsque l'adhérent de la Communauté est une entreprise). C'est dans ce BPG que chaque utilisateur expéditeur remet les correspondances qu'il souhaite envoyer, selon des modalités qui seront détaillées plus loin dans la description, et que sont stockées les correspondances effectivement envoyées et reçues dans un Compte de Correspondance Consolidé (CCC). Lesdites modalités dépendent du type de correspondance. Dans un mode de réalisation de l'invention, 20 types de correspondances, dites universelles, sont définis, entre lesquelles l'utilisateur expéditeur peut choisir. A chaque type de correspondance universelle, est associé un processus d'établissement de la valeur probante. C'est dans le BPG que l'utilisateur désigne les OPET qui traiteront ses correspondances. C'est également dans le BPG que l'utilisateur expéditeur désigne les destinataires de ses correspondances (qui doivent avoir signé une Convention de Correspondance Bilatérale - CCB - ou qui pourront être invités à le faire. Les prestataires PSD réalisent également :
- une fonction 1320 de préparation et d'ordonnancement des opérations de correspondance électronique, qui consiste à répartir les traitements de la correspondance entre les opérateurs ;
- une fonction 1330 de contrôle des opérations réalisées, comme on le verra dans la présente description.

Dans la pratique, des entités du premier type peuvent souhaiter déployer des services de domiciliation de correspondance électronique pour leurs clients. Dans ce cas, les entités du 1^{er} et du 2^{ème} types constitueront une entité unique. Cela sera également le cas si des PSD décident d'offrir un accès direct à un annuaire qui leur est propre qui sera d'autant plus important que la commercialisation de leur service sera un succès.

Les entités du troisième type sont constituées par les OPET. Des OPET par défaut peuvent être proposés par les PSD. Les OPET doivent être agréés par ledit PSD et se conformer aux procédures prescrites. Un utilisateur qui gère des flux importants de correspondance peut cependant choisir des OPET différents par catégorie de flux ou par catégorie de destinataires. Les serveurs de composition, de commutation, de transmission et d'archivage qui sont représentés sur la figure 1 peuvent tout à fait être dans des lieux géographiques différents, à la condition de pouvoir communiquer entre eux selon les modalités prescrites par le gestionnaire du système de l'invention, détaillées plus loin dans la description. On verra par ailleurs que la question de savoir si un OPET exécute des prestations dans les frontières d'un seul pays (et donc potentiellement d'un seul PSC-COR, comme expliqué plus loin), peut avoir son importance. La pression sur les coûts des prestations de services de ce type pousse déjà à une centralisation des opérations dans des centres de traitement partagés de taille importante (Shared Service centres ou SSC) ayant vocation à commercialiser leurs services dans plusieurs pays. Dans ce cas, un même OPET sera soumis à des politiques de certification différentes par des PSC-COR différentes. On parlera alors dans la suite de la description d'Opérateur de Traitement Mutualisé ou OPEM. Les OPET qui ne sont soumis qu'à une seule politique de certification seront qualifiés d'OPEN ou Opérateurs de Traitement Nationaux.

Les entités du quatrième type sont constituées par les PSC-COR qui gèrent des serveurs de certification 1500, 1501, 1502. Les PSC-COR ont la responsabilité finale de garantir la valeur probante des correspondances électroniques qui sont échangées dans le système de l'invention. Cette valeur probante étant définie par des cadres législatifs et réglementaires nationaux, il est avantageux d'envisager que la responsabilité d'un PSC-COR soit établie dans un cadre national, ou au moins conforme à celui de chaque législation nationale. C'est pour cette raison qu'il faut envisager un ou plusieurs PSC-COR d'un type particulier, ayant la responsabilité d'assurer l'interopérabilité juridique des PSC-COR de premier niveau. C'est une architecture de ce type qui est représentée sur la figure 1. On peut cependant envisager une architecture à plus de deux niveaux d'PSC-COR sans sortir du cadre de la présente invention.

On peut également envisager qu'un PSC-COR effectue des fonctions de PSD. Au plan organisationnel, cela ne pose pas de problème particulier car les deux entités ont un rôle d'enregistrement des utilisateurs (PSD), d'ordonnancement des opérations des OPET (PSD) et de contrôle (PSC-COR) desdites opérations et coopèrent pour atteindre la valeur probante la plus élevée. Au plan technique, l'architecture prévoira en règle générale de manière privilégiée deux serveurs distincts exerçant chacun une partie des fonctions du système.

Chaque PSC-COR doit établir des liaisons avec des opérateurs d'un type particulier, qui dans un mode de réalisation de l'invention sont de deux types, englobés dans une catégorie générale de Prestataires de Services de Certification Electronique (PSCE), qui ne sont pas spécifiques des opérations de correspondance électronique sécurisée:
- Un premier type de PSCE est constitué par les PSCE de Signature Electronique (PSCE/SE) ; la signature électronique fait généralement appel à des techniques de cryptographie, qui nécessitent pour avoir valeur probante, une autorisation délivrée par des autorités gouvernementales ; un PSCE/SE gère une base de données des clés de chiffrement utilisées pour la signature électronique ; il doit être en mesure de tenir à jour les clés répudiées ou révoquées (par leur détenteur ou une autorité habilitée, notamment en cas d'utilisation frauduleuse ou douteuse) pour pouvoir garantir qu'une clé utilisée à un moment donné est valide ; le serveur de certification interroge ladite base de données du PSCE/SE soit à chaque fois qu'une signature électronique est utilisée dans le système, soit par lots à des fréquences réalisant un compromis entre la fiabilité du système et la charge du système informatique;
- Un deuxième type de PSCE est constitué par les PSCE d'Horodatage (PSCE/HD) ; l'horodatage permet de donner une date certaine, calée sur une horloge atomique, aux documents qui sont soumis à cette procédure ; les PSCE/HD doivent également disposer d'un agrément ; le serveur de certification envoie une requête d'horodatage au PSCE/HD d'un condensat du document à horodater et le certificat d'horodatage qu'il reçoit en retour est scellé avec le document ;

On peut tout à fait envisager, dans le cadre du système de l'invention, que certaines des fonctions indiquées ci-dessus soient effectuées par un PSC-COR, à la condition que le PSC-COR dispose des agréments nécessaires. Cependant, la chaîne de confiance aura une valeur probante supérieure si les PSC-COR et PSCE des deux types sont indépendants les uns des autres.

L'architecture fonctionnelle générale du système de l'invention étant maintenant décrite, il convient de présenter une de ses caractéristiques principales constituée par un module de gestion des sessions de correspondance électronique. Une session est initiée avec un serveur d'un PSD 1200, 1201, 1202 par un utilisateur expéditeur 1101 qui souhaite expédier des correspondances électroniques. Elle peut être initiée également par un utilisateur destinataire 1102 qui souhaite prendre connaissance d'une correspondance dont il a reçu notification et en accuser réception. Plusieurs types de sessions peuvent être définis. Une session regroupe plusieurs processus permettant d'exécuter les opérations de correspondance électronique et leur certification quand leur exécution est conforme.

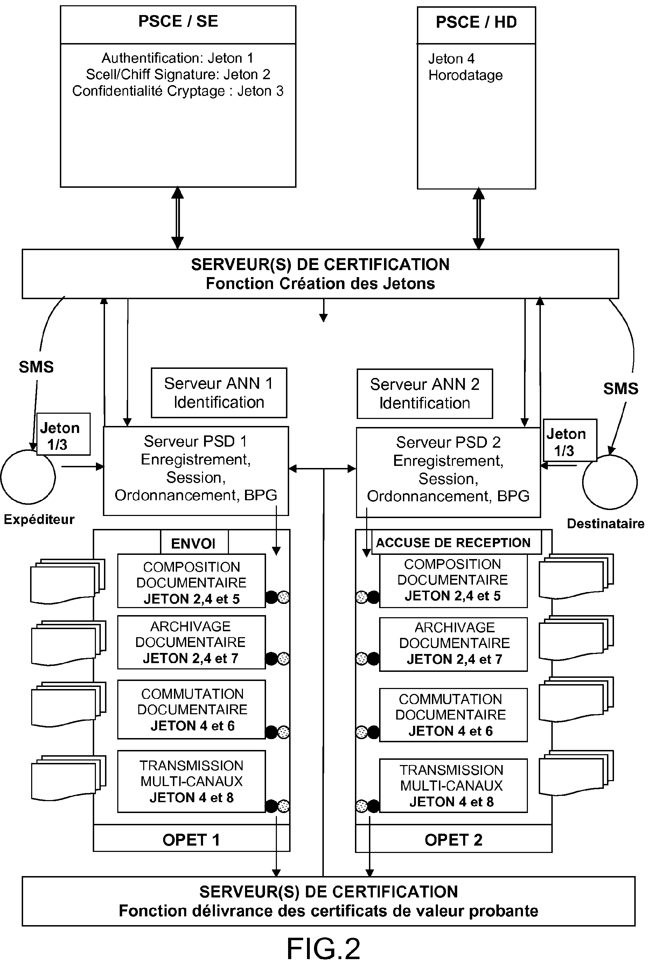

La figure 2 représente les liens entre les différents acteurs d'un système de correspondance électronique sécurisée dans un mode de réalisation de l'invention.

Une deuxième caractéristique importante de l'invention est de prévoir la création pour chaque type de correspondance d'un ensemble de jetons de certification. Dans l'exemple de la figure 2, on peut identifier les principaux jetons propres à chacune des étapes du processus de production d'une correspondance électronique sécurisée. Ces jetons sont créés par le serveur de certification au cours des différentes sessions et envoyés aux différents acteurs de la chaîne de traitement des correspondances électroniques traitées lors de la session (PSD et OPET). Certains jetons doivent être validés par les PSCE. Les jetons sont renvoyés au PSC-COR lorsqu'ils ont reçu leur dernière validation. Lorsqu'il a recueilli tous les jetons en provenance de tous les acteurs et vérifié la complétude de couverture des opérations de traitement de la correspondance, le serveur de certification délivre un certificat de valeur probante au serveur de gestion.

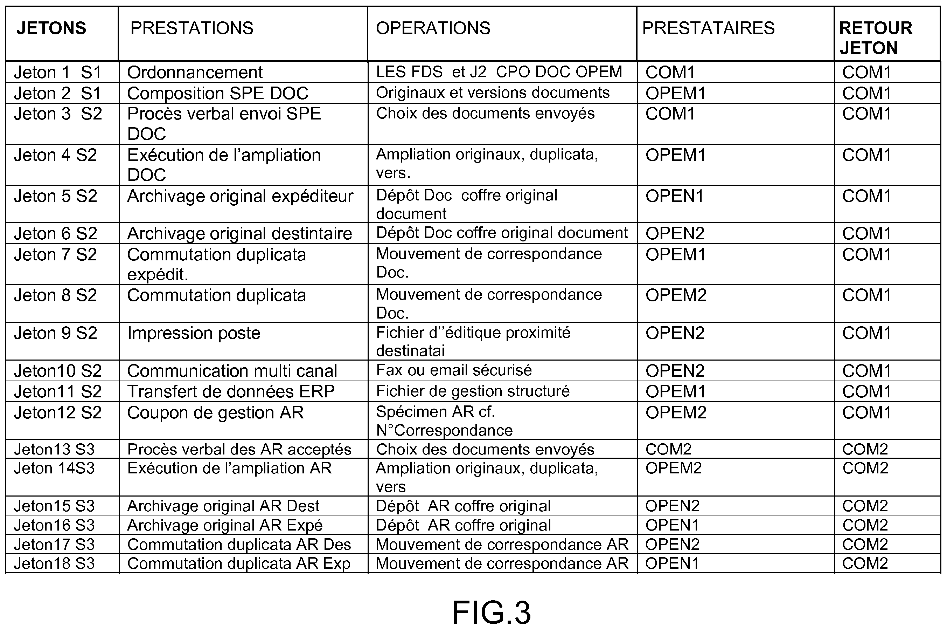

La figure 3 définit les jetons de certification utilisés par les traitements dans un mode de réalisation de l'invention ;

Les jetons qui sont définis pour la mise en œuvre de l'invention sont des jetons de certification dont la circulation en liaison avec celle des documents objet de l'opération de correspondance électronique permet de valider la réalisation de chacune des sous opérations en conformité avec le cahier des charges défini par le ou les PSC-COR qui interviennent dans l'opération de correspondance électronique pour faire respecter la conformité globale et bilatérale.

Dans le mode de réalisation décrit, 18 jetons de certification ont été définis. Selon le découpage du processus de production et de transmission des documents, il peut être avantageux de prévoir davantage ou moins de jetons. La définition des jetons illustrée par la figure n'est donc en aucune manière limitative. Chaque type de correspondance (TYPCO) dans la nomenclature universelle possède un nombre défini et caractéristique de jetons qui déterminent sa valeur probante maximale sur l'échelle de notation des correspondances définie par le PSC-COR.

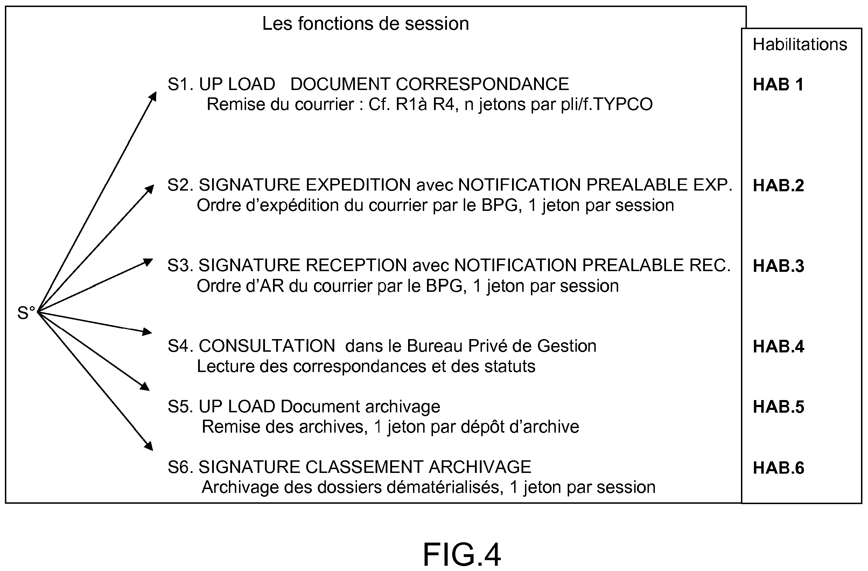

Le tableau de la figure indique pour chaque jeton le type de session au cours de laquelle il est utilisé (lesdits types étant définis dans les commentaires ci-dessous relatifs à la figure 4), les prestations et opérations qu'ils couvrent, le ou les prestataires concernés, le serveur auquel est adressé le jeton en fin de parcours.

Les différentes prestations et opérations auxquelles sont associés les jetons sont maintenant décrites de manière succincte, certaines d'entre elles faisant l'objet de développements dans la suite de la description :
- J1 permet de valider l'opération d'ordonnancement qui consiste à définir la liste et l'ordre des opérations de traitement d'une correspondance électronique ainsi que l'identité de l'OPET qui doit effectuer chacune d'entre elles ; l'opération à effectuer est l'élaboration de fichiers comportant le type de correspondance universelle, les données à utiliser, les modèles de présentation, les règles de composition et les opérateurs à utiliser ;
- J2 trace la composition d'une correspondance, opération qui consiste à générer les correspondances elles-mêmes à partir des FGS ; l'opération à effectuer est la génération de Spécimens SPE (en nombre défini en fonction du type de correspondance et du nombre de destinataires), à partir desquels seront fabriqués, après validation de la correspondance par l'émetteur, des versions dérivées (Originaux, Duplicata, DUP, fichier de gestion, etc...);
- J3 est un procès-verbal d'envoi et indique quelle version du document est choisie pour être envoyée ;
- J4 permet la validation de l'ampliation qui consiste à générer des versions dérivées en nombre paramétrable et limité;
- J5 et J6 permettent de valider l'archivage des originaux de l'expéditeur et des destinataires qui se fait dans un coffre-fort électronique chez un opérateur spécialisé, de manière privilégiée en mode chiffré, éventuellement, avec une conservation des clés nécessaires chez un tiers séquestre;
- J7 et J8 permettent de valider la commutation des duplicata pour l'expéditeur et les destinataires ; la commutation est une opération permettant de s'assurer que toute opération de correspondance électronique a une contrepartie (émission/réception ; duplicata/original) ; c'est le principe de bilatéralité qui permet de fiabiliser toute la chaîne de correspondance électronique ; ce principe de bilatéralité implique que tout mouvement de correspondance est considéré comme une écriture comptable qui ne peut être passée dans un compte de correspondance (qui est comme un compte comptable en partie double) que si sa contrepartie est enregistrée dans un autre compte de correspondance; provisoirement, une correspondance peut transiter par un compte d'attente ; l'écriture ne sera pas passée si la contrepartie n'est pas parvenue au bout d'un temps paramétrable ;
- J9 valide la génération d'un fichier d'impression à proximité d'un destinataire qui doit recevoir un original papier pour son archivage ;
- J10 valide l'envoi par fax ou e-mail sécurisé (Communication multi canal) ;
- J11 valide le transfert des données servant à l'élaboration des correspondances électroniques à partir d'un ERP via l'élaboration d'un Fichier de Gestion Structuré (FGS) ;
- J12 valide la création d'un coupon de gestion d'accusé de réception (AR) ; un coupon de gestion est un document secondaire rattaché au document principal, dont le modèle est défini en fonction du type de correspondance ; ce coupon de gestion est mis à la disposition d'un opérateur désigné pour l'établir ultérieurement ; le jeton de coupon est mis temporairement dans le BPG de celui qui est chargé de l'activer ultérieurement afin d'ordonnancer chez l'opérateur de coupon de gestion correspondant la composition de l'original désiré;
- J13 à J18 sont les équivalents de J3 à J8 pour les AR.

Les prestataires et opérateurs concernés sont le PSD de l'expéditeur (PSD1) et du ou des destinataires (PSD2) et les OPET de l'expéditeur (OPEM1, OPEN1) et du ou des destinataires (OPEM2, OPEN2). En fait, seul l'archivage des originaux et des AR, éventuellement la communication multi canal doivent en règle générale être confiés à des opérateurs nationaux.

La figure 4 représente les différents types de session utilisables dans un mode de réalisation de l'invention.

Dans un mode de réalisation de l'invention, on définit, dans un module 1341, 1342 de gestion de sessions de correspondance électronique sécurisée, six types de sessions qui sont brièvement décrites ci-dessous, chacun des types faisant ensuite l'objet d'une description détaillée en liaison avec les figures suivantes.

La session de type S₀ est un point d'entrée commun à tous les autres types de session. Elle permet d'authentifier non seulement l'utilisateur mais l'ensemble des acteurs qui vont intervenir dans la session à venir (type S₁ à S₆). Le nombre et la nature des authentifications à opérer au stade de la session S₀ dépendront donc du type de la session à venir que l'utilisateur devra indiquer lors de son login.

La session de type S₁ permet à un utilisateur expéditeur de remettre dans son BPG un ensemble de documents qu'il veut transformer en correspondance électronique. Une session de ce type gère en particulier le choix du chemin de routage électronique et la création et la circulation des jetons de certification en fonction du type de correspondance.

La session de type S₂ permet à l'expéditeur de valider par sa signature ou celle d'un mandataire l'expédition d'une correspondance électronique après composition.

La session de type S₃ permet à un destinataire de valider par sa signature ou celle d'un mandataire la réception d'une correspondance électronique et d'expédier, le cas échéant, un accusé de réception, après notification préalable aux destinataires de l'arrivée d'une correspondance qui leur est destinée.

La session de type S₄ permet à un utilisateur expéditeur ou destinataire d'accéder à son BPG pour prendre connaissance des correspondances envoyées ou reçues, des encours (brouillons, statuts intermédiaires, envois non encore validés, notifications de réception non soldées, ...) ainsi que, éventuellement, pour consulter les différentes règles de gestion de l'application de gestion des correspondances électroniques propres à un utilisateur ou un ensemble d'utilisateurs, les mandats de gestion et les conventions de correspondance universelle ou les conventions de correspondance bilatérales.

La session de type S₅ permet à un utilisateur de remettre dans son BPG des documents à archiver.

La session de type S₆ permet à un utilisateur de valider par sa signature ou celle d'un mandataire l'archivage des dossiers remis et donc de déclencher ledit archivage en classant les correspondances en dossiers électroniques. A chaque type de session correspond un type d'habilitation (type H₁ à H₆, respectivement pour les sessions de type S₁ à S₆) dont le champ et les spécifications sont fonction du type d'opérations à effectuer dans le type de session pour laquelle l'habilitation est délivrée.

Des sessions d'autres types peuvent être ajoutés (par exemple, une session spécifique à un processus de validation de factures telle qu'une proposition de paiement) sans que le système les mettant en œuvre sorte nécessairement du champ de l'invention qui ne porte pas sur un ensemble déterminé de sessions mais sur des procédés mis en œuvre dans tout ou partie des dites sessions.

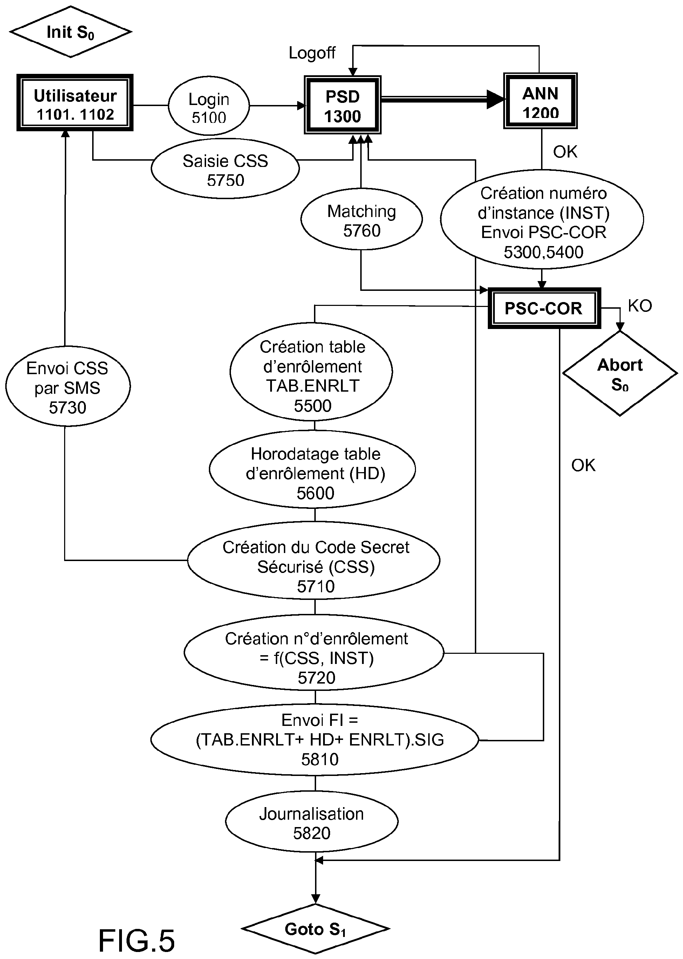

La figure 5 représente un organigramme des traitements pour mettre en oeuvre une session de type S₀ dans un mode de réalisation de l'invention.

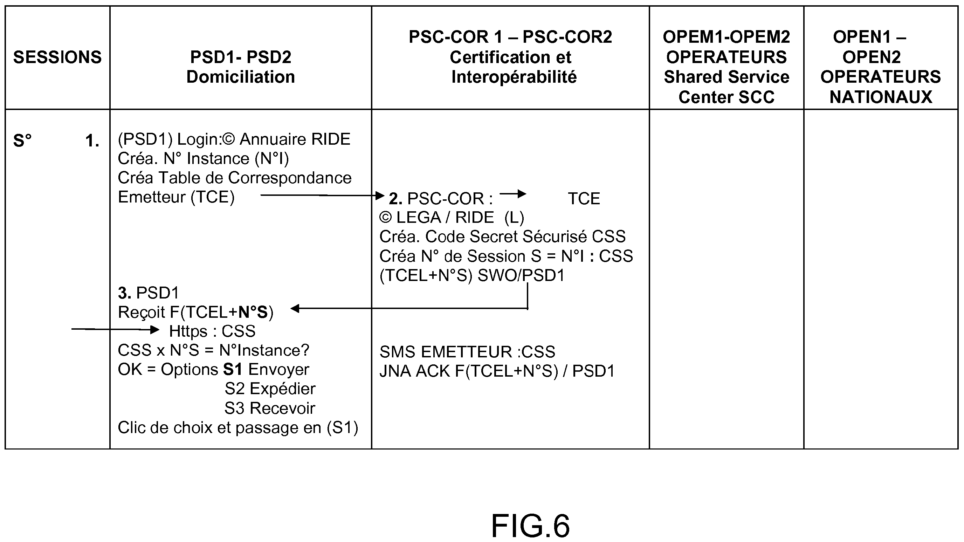

La figure 6 représente les flux de données gérés par une fonction S₀ dans un mode de réalisation de l'invention.

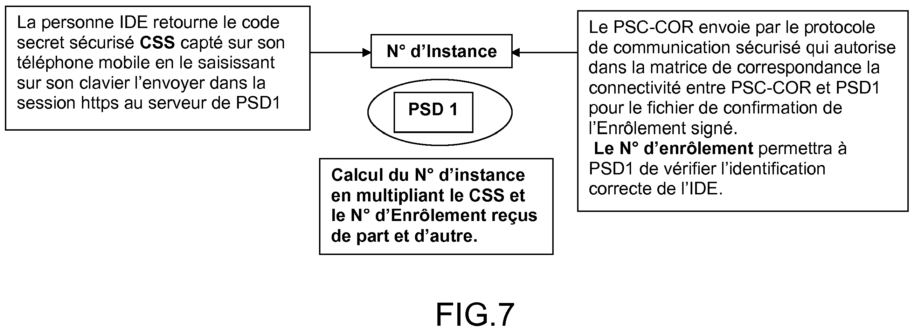

La figure 7 représente un schéma de principe d'une procédure d'enrôlement mise en œuvre par la fonction S₀ dans un mode de réalisation de l'invention.

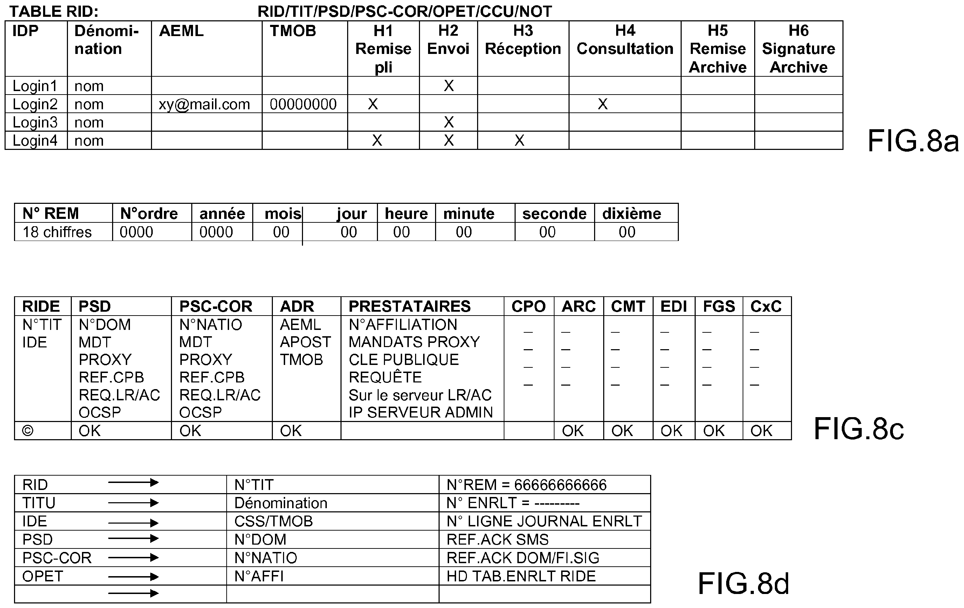

Les figures 8a à 8d représentent des tables utiles à la mise en œuvre de la fonction S₀ dans un mode de réalisation de l'invention.

Nous commentons ces figures de 5 à 8 de manière combinée dans la suite de la description dans la mesure où elles concernent toutes les sessions de type S₀.

Les sessions de tous types sont précédées par une session de type S₀. La 1^{ère} étape 5100 d'une session de ce type est le login de l'utilisateur au serveur de domiciliation 1200, 1201, 1202. Un Compte de Correspondance Consolidé (CCC) et un Relevé d'Identité Documentaire (RID) ont préalablement été attribués à un utilisateur à la suite d'une procédure d'enregistrement. Le CCC donne à l'utilisateur une consolidée des Comptes de Correspondance (CC) qu'il peut détenir chez plusieurs OPET.

La 2^{ème} étape 5200 est, comme dans toute procédure de connexion à un serveur, la recherche de l'identité de l'utilisateur dans l'annuaire ANN 1200. Une recherche est également effectuée dans les autres annuaires auxquels le BPG 1310 de l'utilisateur peut avoir eu accès lors de sessions précédentes, ainsi que dans les annuaires du PSC-COR. La connexion est refusée lorsque l'utilisateur qui cherche à se connecter ne figure pas dans un des annuaires interrogés. L'utilisateur doit également indiquer quelle est la session qu'il voudra exécuter après la session d'ouverture, le contenu des contrôles effectués lors de celle-ci dépendant de la session qui suivra.

Le BPG extrait le RID et l'identité TIT du titulaire du RID. Un titulaire peut être soit une personne physique soit une personne morale qui aura habilité une ou plusieurs personnes physiques, éventuellement à des niveaux différents pour effectuer en son nom les différentes opérations de correspondance électronique. Pour être habilité à effectuer des opérations de correspondance électronique dans le système de l'invention, chaque titulaire (TIT) doit avoir signé une Convention de Correspondance Universelle (CCU) avec un opérateur DOM. Cette convention définit notamment les habilitations délivrées à des fondés de pouvoir de son organisation et les mandats donnés à son opérateur PSD et aux OPET pour effectuer en son nom les expéditions, les réceptions, les archivages et, le cas échéant, d'autres opérations.

En fonction de règles de gestion définies par le PSC-COR, le titulaire fait l'objet d'une notation NOT de son identité numérique. La notation de l'identité numérique peut être définie sur une échelle allant par exemple de 0 à 4. A zéro, il s'agit d'un enregistrement personnel insuffisant, sans justificatifs, ou annulé soit à la demande de la personne (révocation du compte), soit parce qu'il existe un indice ou une cause d'annulation (par exemple, l'adresse ou la domiciliation nationale s'avère fausse, commission rogatoire de suspension du service, etc...). Dans le cas où la session à suivre est une remise de documents pour expédition, l'ouverture de session sera filtrée en fonction du type de correspondance que l'utilisateur expéditeur veut remettre et de son niveau NOT.

Les annuaires contiennent, pour chaque utilisateur son PSC-COR et ses OPET.

Le RID comprend deux parties :
- la première contient les attributs de confiance, le carnet d'adresses, les CCU et les Conventions ce Courrier Bilatérales (CCB),
- et la seconde partie les données d'identification du BPG de l'utilisateur où figurent l'inventaire des flux de correspondance en cours ou réalisés avec les statuts et les certificats des opérations intermédiaires.

A partir de ces différents éléments qui caractérisent l'identité numérique d'un titulaire et des personnes qui le représentent, est définie une TABLE RID dont un exemple est représenté par la figure 8a. La ligne du haut hors tableau caractérise le titulaire personne morale avec indication du PSD, du PSC-COR et des OPET auxquels il est rattaché et les lignes du tableau concernent les personnes physiques rattachées à la personne morale, avec indication de leur nom (DENO), de leur adresse e-mail (AEML), de leur numéro de téléphone mobile (TMOB) et de leurs habilitations (H₁ à H₆).

Pour passer à la 3^{ème} étape 5300 du processus de la session S 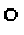 , il faut que la table RID de la figure 8a soit complète.

Si c'est le cas, il est créé un numéro d'INSTANCE ou de REMISE (N° INST ou N° REM) qui est le numéro d'ordre à un instant donné de l'ouverture de session (ou de remise, lorsque la session est une session de remise pour expédition ou pour archivage). Un exemple de n° INST/REM à 18 chiffres est donné sur la figure 8b. Le numéro de remise est indépendant du nombre d'envois ou de destinataires. Il est propre à chaque instance de session S 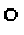 .

Au cours d'une 4^{ème} étape 5400, le serveur de gestion 1200 soumet la table RID et le N°INST/REM au serveur de certification 1500 du PSC-COR auquel l'opérateur PSD de l'utilisateur est rattaché.

Commencent alors les étapes dites « d'enrôlement » qui permettent de vérifier tous les attributs de confiance de l'utilisateur.

La 5^{ème} étape 5500 du processus de la session S₀ comprend le remplissage par le PSC-COR d'une table TAB.ENRLT/RID telle que celle donnée à titre d'exemple sur la figure 8c.

Un exemple des vérifications qui peuvent être effectuées est donné ci-dessous sans que cette liste doive être considérée comme obligatoire ou comme limitative, dans la mesure où elle peut changer en fonction de la réglementation applicable et/ou du contexte d'emploi du système de l'invention. En fonction du type de session suivant la session S 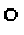 , les vérifications ci-dessous sont opérées ou pas.

Le PSC-COR vérifie, en remplissant les zones du tableau RID, que l'adhérent est bien inscrit dans son pays, c'est-à-dire assujetti aux mesures de sécurité, ou à la politique de sécurité locale et nationale. Il vérifie ensuite que cet adhérent dispose de tous les attributs pour gérer une ou plusieurs correspondances hybrides ou dématérialisées. A ce titre, le PSC-COR vérifie qu'on dispose de ses adresses pour remettre les informations ou notifier à ce titulaire ou à ses préposés des messages (notification) qui sont notamment nécessaires à la validation pour l'envoi et pour la réception des documents échangés entre les parties de façon bilatérale. Le PSC-COR vérifie également que les différentes conventions liant l'utilisateur à son opérateur PSD, et celui-ci au PSC-COR compétent, sont bien en cours de validité. Le PSC-COR vérifie ensuite que les prestataires de l'utilisateur (PSD 1300 et OPET 1700) possèdent les pouvoirs et les signatures électroniques en cours de validité qui sont nécessaires, et que l'on dispose des adresses IP des serveurs qu'ils utilisent. Le PSC-COR vérifie que ces éléments sont valides et utilisables et pour quels types de correspondance ils sont valides.

Si on prépare l'ouverture d'une session de remise et que l'utilisateur expéditeur indique que les opérations sont confiées à plusieurs OPET agissant pour le compte de l'expéditeur mais aussi de chacun des destinataires, en se répartissant des rôles pour la composition, l'archivage, la commutation et la transmission multi canal, le PSC-COR devra vérifier pour chacun d'eux, qu'il existe un mandat de prestation signé et valide, une ou plusieurs signatures électroniques valides selon le nombre des opérations sous-traitées, et une adresse IP pour chaque serveur de communication canalisant des échanges entre les acteurs des opérations de dématérialisation.

Au cours de cette étape 5500, pour chaque session S₀ présentée par un adhérent à PSD 1300, le PSC-COR doit interroger le ou les PSCE-SE et PSCE-HD agréés sur le territoire national de manière à vérifier que les signatures électroniques utilisées dans les processus sont valables, et prendre une marque de temps auprès d'un PSCE-HD. Le PSC-COR doit ainsi normalement contrôler chaque :
- Signature électronique auprès du PSCE-SE qui l'a enregistré
- Horodatage sur l'horloge atomique choisie sur le fuseau horaire et le pays concerné.

Une requête auprès du serveur de révocation PSCE-SE permet de vérifier que l'identité numérique propre à chaque signature est actuellement valide. Le serveur de révocation délivre une attestation de validité qui permet d'établir la valeur probante du scellement, de l'archivage, et du transfert de données sécurisé. Toutes les signatures qu'un OPET utilise dans les opérations de traitement de la correspondance dématérialisée doivent ainsi être vérifiées (entre deux et trois signatures par opérateur dans une opération usuelle).

Lorsque l'expéditeur et certains destinataires disposent également de signatures électroniques (notation de leur identité numérique égale à 4), ils peuvent alors disposer, à la demande, d'une signature électronique pour signer personnellement avant envoi les documents que l'expéditeur remet sur le BPG de son PSD, ces signatures devront également être vérifiées par le PSC-COR avant de lancer le processus de correspondance en fonction du type de correspondance dématérialisée choisi. Pour assurer le temps réel du traitement de volumes d'ordres de correspondance pouvant atteindre plusieurs millions, le PSC-COR s'organise pour conserver la clé publique de chaque adhérent et de chaque OPET et effectuer une mise à jour à la périodicité voulue des informations stockées sur les serveurs de révocation. En mutualisant ainsi le contrôle des signatures, le PSC-COR peut à tout moment savoir si une signature est en défaut ou non et apporter la preuve que celle-ci n'est pas sur la liste de révocation qu'elle a consultée. La preuve de la validité de chaque signature électronique utilisée pour du scellement, de l'horodatage, de l'archivage, et de la transmission est nécessaire pour établir in fine le certificat ou la garantie de la valeur probante de la correspondance bilatérale et de l'archivage légal.

Si la table d'enrôlement TAB.ENRLT/RID est convenablement complétée pour le RID/N°INST/REM, le PSC-COR avalise le passage à la 6^{ème} étape 5600.

Celle-ci consiste à horodater la table d'enrôlement TAB.ENRLT/RID. Pour cela, une requête d'horodatage est envoyée par le PSC-COR à un PSCE/HD qui est synchronisé avec une base de temps, celle normalement utilisée dans son pays et reconnue par les pouvoirs publics, notamment pour les actes fiscaux.

La 7^{ème} étape 5700, qui est illustrée sur la figure 7, consiste à authentifier l'utilisateur de manière forte par le serveur de certification 1700. Un mode d'authentification forte privilégié dans le système de l'invention comprend :
- une 1^{ère} sous étape 5710 de création d'un Code Secret Sécurisé (CSS) qui est un nombre aléatoire, par exemple de 7 à 9 chiffres ;
- une 2^{ème} sous étape 5720 de création d'un numéro d'ENROLEMENT (N°ENRLT) ; dans un mode privilégié de réalisation, ce N°ENRLT est égal à une fonction simple de N° REM /INST et de CSS, par exemple une division, mais ça peut également être une autre fonction arithmétique ou une fonction plus complexe ; ce N° ENRLT est inscrit dans le journal d'enrôlement tenu au jour le jour ;
- la 3^{ème} sous étape 5730 est la communication du CSS à l'utilisateur, de manière préférentielle par un message de type SMS (Short Message System) envoyé sur son téléphone portable ;
- la 4^{ème} sous étape 5740 est la communication du N°ENRLT par le serveur de certification du PSC-COR 1700 au serveur PSD 1300 ;
- la 5^{ème} sous étape 5750 est la saisie par l'utilisateur du CSS qu'il a reçu dans l'interface d'entrée du serveur de gestion (étant observé que dans un mode de réalisation privilégié, la durée de validité du CSS est éphémère, par exemple de l'ordre de 30 secondes) ;
- la 6^{ème} sous étape 5760 consiste à réaliser le « matching » du CSS avec celui extrait du N°ENRLT par application de la fonction inverse de celle appliquée au moment du calcul ; si le « matching » est positif, la session suivante (de type S₁ à S₆) peut être ouverte ; à défaut la session S₀ se conclut par un « Abort » ; la preuve du « matching » positif est horodatée.

En cas d'issue positive de la 7^{ème} étape, le processus d'ouverture peut se poursuivre avec la 8^{ème} étape 5810, 5820 au cours de laquelle le serveur de certification 1500 envoie au serveur PSD 1300 le fichier constitué par TAB.ENRLT, HD, N°ENRLT sur lequel il a apposé sa signature [FI (TAB.ENRLT + HD + N° ENRLT) .SIG] puis journalise les opérations d'ouverture de session.

Un exemple de journal d'enrôlement est représenté sur la figure 8d. Le journal comprend en particulier l'indication des références des AR ou ACK qui sont nécessaires, en particulier, l'ACK de l'entrée du CSS et du FI.SIG par le serveur PSD 1300.

Le serveur PSD 1300, qui avait soumis son tableau RID avec le N° INST/REM, reçoit donc en retour une confirmation de la validité de la session qui vient d'être ouverte avec un N° de session (de type S₁ à S₆) qui n'est autre que la confirmation de la validité de l'enrôlement en cours. A ce stade, l'enrôlement ne fait que confirmer que le titulaire expéditeur est connu (avec les habilitations nécessaires) et que ses prestataires ont les droits requis pour lancer la dématérialisation documentaire. Le message du PSC-COR est signé par elle avec la preuve préalable de la validité de sa signature.

A partir du moment où l'identification de l'adhérent est terminée avec la validation de ses attributs et des pouvoirs confiés à ses prestataires, il peut, selon ses habilitations, télécharger de son BPG ou de son poste de travail local, les documents signés ou les fichiers de données destinés à être dématérialisés pour effectuer avec un ou plusieurs prestataires de services, les mouvements de correspondance et d'archivage électroniques de façon bilatérale.

La figure 7 est une vue de la cinématique d'une session de type S₀ qui représente une autre présentation logique des éléments qui viennent d'être présentés.

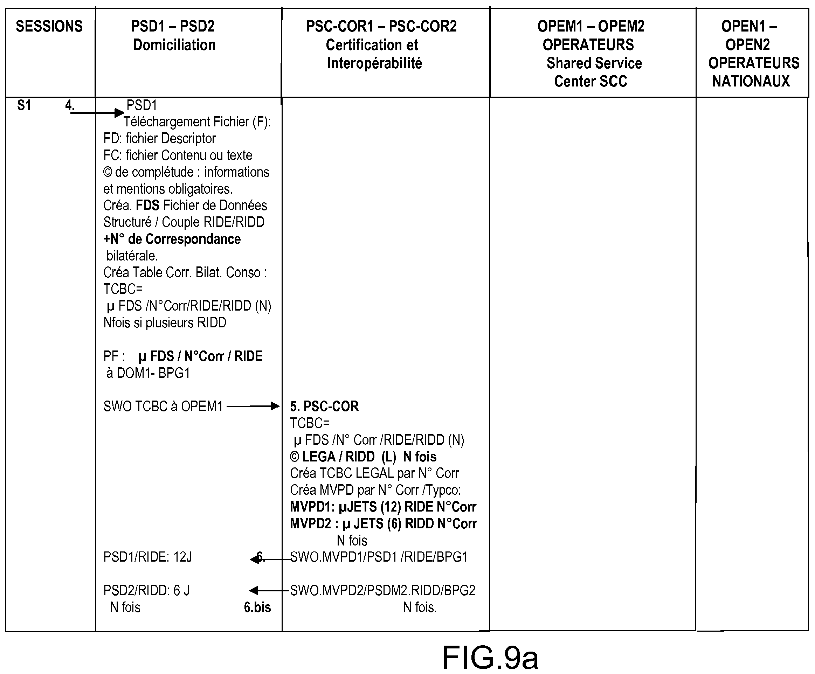

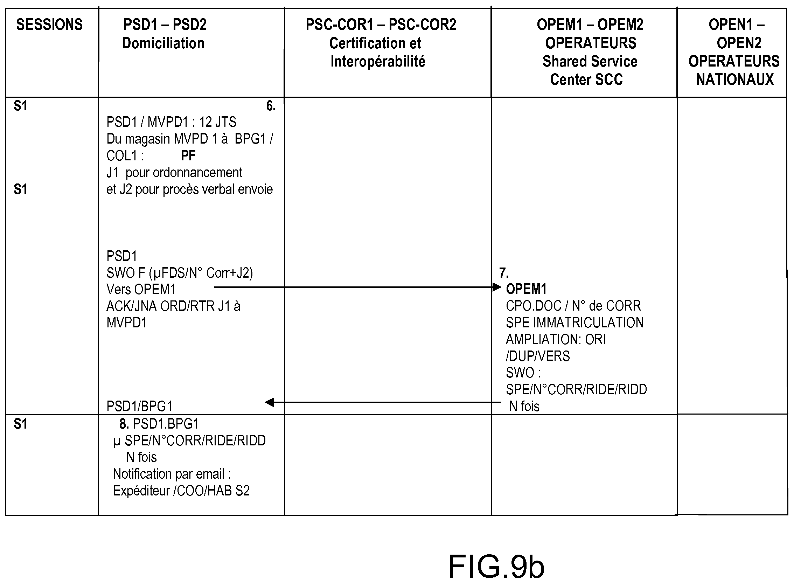

La figure 9 représente les flux de données gérés par une session de type S₁ dans un mode de réalisation de l'invention.

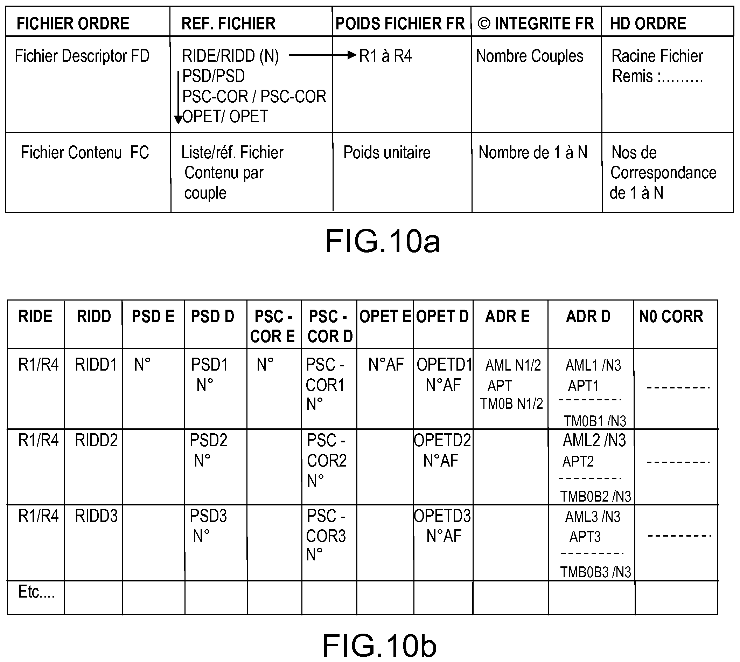

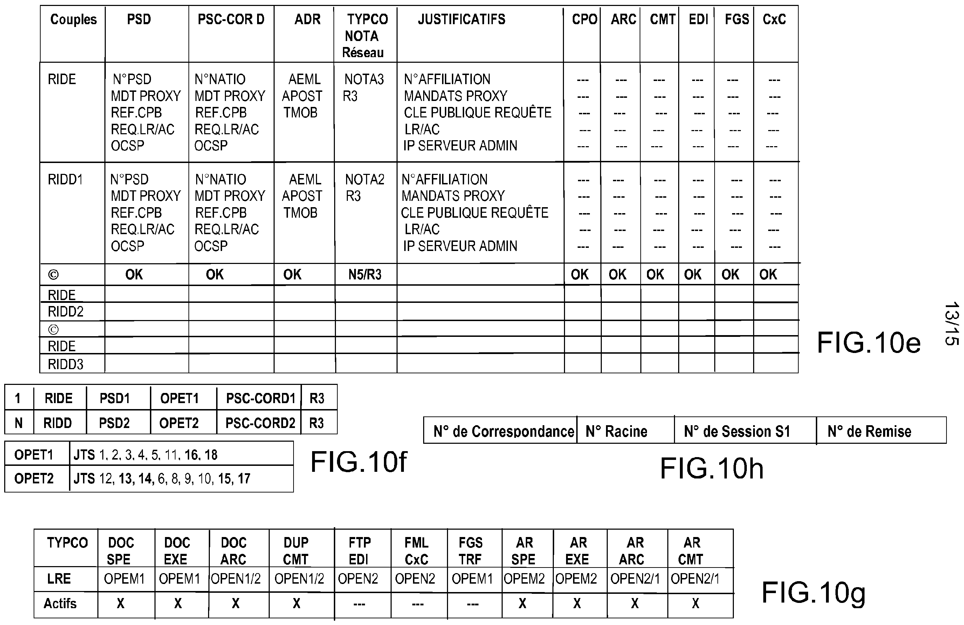

Les figures 10a à 10h représentent des tables utiles à la mise en oeuvre d'une session de type S₁ dans un mode de réalisation de l'invention.

Elles seront commentées conjointement pour présenter les processus mis en œuvre lors d'une session de type S₁.

Au cours d'une session de type S₁, un utilisateur expéditeur 1101 remet dans son BPG 1310 les éléments des correspondances électroniques qu'il veut expédier.

La 1^{ère} étape d'une session de ce type est donc le téléchargement d'un Fichier d'Ordre (FIO) comprenant un « Fichier Descriptor » FD et un Fichier Contenu FC. Dans un mode de réalisation de l'invention, le FD comprend :
- l'indication du type de correspondance envisagé (TYPCO) ;
- la liste des destinataires envisagés avec leur RID.

Pour chaque couple correspondance/destinataires, le BPG doit connaître (ou à défaut obtenir du PSC-COR du destinataire pour lequel les informations sont absentes):
- les références du BPG du destinataire ;
- éventuellement, l'identité de son PSD ;
- l'identité de son OCID ;
- l'identité du ou des OPET ;
- la notation de l'identité numérique du destinataire (dans un mode de réalisation de l'invention, la somme des deux notations de l'identité numérique de l'expéditeur et du destinataire, doit être supérieure à un seuil fixé par le PSC-COR pour que celui-ci puisse certifier la valeur probante de la correspondance envisagée) ; .
- la nature du réseau emprunté; les caractéristiques d'un réseau de communications comprenant quatre sous réseaux de types différents, R₁ à R₄, pour mettre en oeuvre le système de l'invention seront détaillées plus loin dans la description.

Un exemple de FIO est donné par la figure 10a.

Les fichiers traitées par les opérations de correspondance électronique sécurisées comprennent à titre principal un Fichier Contenu (FC), généralement un fichier PDF, et un Fichier Descriptor (FD) qui comprend des éléments de description du document ou des opérations à réaliser, telles que le RIDD (mention obligatoire) et des mentions de gestion.

Au cours d'une 2^{ème} étape d'une session de type S₁, le serveur PSD 1300 doit ensuite, après avoir complété le cas échéant les caractéristiques des deux parties à chaque correspondance, contrôler les données ou le fichier FC, puis attribuer des numéros d'ordre :
- Contrôle d'intégrité des données ou du fichier téléchargé ;
- Relevé du poids des données ou du fichier.

Pour l'ensemble des couples de correspondance établis dans le FD et conformes aux contrôles effectués, le BPG 1310 établit un N° Racine qui est spécifique à chaque téléchargement validé. Il existe donc pour chaque N° de REM Remise, un N° de session ou d'enrôlement, et ensuite, un N° de racine pour suivre les données et les fichiers téléchargés. Si tous ces contrôles et relevés sont positifs, le BPG affecte à chaque couple de correspondance, pour les données ou le fichier à traiter, un « numéro de correspondance unique » qui suivra toute la chaîne des opérations de dématérialisation.

Au cours d'une 3^{ème} étape d'une session de type S₁, le BPG 1310 vérifie la complétude de toutes les informations nécessaires pour effectuer le routage des correspondances à envoyer et à établir un Tableau d'Ordre de Correspondance Consolidé (TOCC)

Dans un mode de réalisation de l'invention, cette 3^{ème} étape est divisée en 3 sous étapes :
- Une 1^{ère} sous étape consiste à vérifier la complétude des informations de routage ;
- Une 2^{ème} sous étape consiste à vérifier la conformité de la présentation des fichiers à transmettre avec le cahier des charges de la prestation modèle définie par le type de correspondance (TYPCO), éventuellement à vérifier la présence de mentions de gestion obligatoires prescrites par la CCB applicable ou par les autorités gouvernementales du pays de l'expéditeur et/ou du pays du destinataire, enfin à établir le TOCC ;
- Une 3^{ème} sous étape consiste à éditer un Journal (JN) de validation regroupant tous les contrôles effectués.
1^{ère} sous étape de la 3^{ème} étape d'une session de type S₁ :COM © Réseau : N°REM / N°ENRLT/ N° RACINE

La complétude consiste à vérifier d'une part que le PSD/BPG dispose de toutes les informations sur la domiciliation (adresses, coordonnées) et sur le routage des destinataires qui peuvent être suivis par des PSD, des PSC-COR et des OPET différents de ceux de l'expéditeur.

Le routage est, pour chaque correspondance, la chaîne de confiance reliant, de part et d'autre, le ou les PSD, un ou deux PSC-COR, avec plusieurs OPET selon la nature du réseau emprunté (R₁ à R₄ comme détaillé plus loin dans la description). Ces informations sont normalement intégrées dans les RID des différents correspondants. Mais, si l'expéditeur ne connaît pas les RID des destinataires, il peut seulement correspondre par la poste, par le mail, ou par le fax, le destinataire ne disposant pas encore d'un compte de correspondance. Le dernier recours pour connaître le RID d'un destinataire, c'est d'interroger le PSC-COR. Mais ce n'est pas suffisant pour une correspondance dématérialisée puisque cela nécessite toujours entre les parties la signature préalable d'une CCB (qui doit être précédée ou accompagnée de la signature d'une CCU). Si le destinataire pressenti pour une correspondance ne dispose pas de compte CC, l'expéditeur peut accompagner son courrier, qui sera finalement routé par voie postale, d'une invitation électronique qui recommande au destinataire de s'enregistrer auprès d'un PSD (liste proposée) et de disposer ainsi d'un compte courant de correspondance lui permettant de conserver la trace électronique de tous ses documents entrants et sortants. Si cette invitation est acceptée par son destinataire, elle conduit à une procédure d'enregistrement. Cette procédure d'enregistrement se déroule sur le serveur PSD choisi par l'invité au cours d'une session particulière (Membership Application Registration, MAR) au cours de laquelle, dans un mode de réalisation :
- L'invité doit fournir ses attributs d'identification (Identification de sa société, si la demande est présentée à ce titre ; identification personnelle ; son adresse (ADR) ; ses références TMOB (pour la procédure d'authentification forte nécessaire pour ouvrir une session de type S₀), AEML (pour recevoir ses correspondances et notifications); numéros de téléphone et de fax (facultatifs) ;
- L'invité doit accepter (en double cliquant sur les zones prévues à cet effet dans les documents) les CCU du PSD et CCB de l'invitant, ces acceptations étant routées vers le PSD, le PSC-COR compétent et les OPET choisis sur une liste ;
- L'invité doit fournir un identifiant et un mot de passe ;
- Il doit choisir s'il souhaite utiliser une signature électronique.

Le demandeur peut avoir à justifier de certains de ses attributs par l'envoi de preuves (facture EDF pour la domiciliation ; facture opérateur de télécommunication pour TMOB). Dans ce cas la demande d'enregistrement ne sera acceptée par le PSD qu'après réception et contrôle des documents demandés. Dans certains pays, l'attribution d'une signature électronique nécessite une procédure de face à face avec un représentant du PSCE-SE dans un bureau d'enregistrement, procédure au cours de laquelle un identifiant et un mot de passe de signature sont remis à l'utilisateur en même temps que le support matériel (carte à puce, clé USB) et les éléments logiciels nécessaires à l'exécution de la procédure de signature. Lesdits documents de preuve et la piste d'audit de la session MAR sont archivés par le PSD. Après enregistrement, l'utilisateur peut effectuer les opérations prévues par la CCU et la CCB, et seulement celles-ci.

Dans le cas où l'utilisateur destinataire est enregistré, pour chaque couple expéditeur/destinataire, le BPG vérifie qu'il dispose des informations de correspondance pour le ou les destinataires listés, ceci avant d'interroger le PSD-COR qui dispose d'un annuaire national ou régional :
- Annuaire identique ou différent ;
- PSC-COR identique ou différent ;
- OPETs identiques ou différents ;
- Caractéristiques de domiciliation pour l'expéditeur et pour le destinataire
   ∘ Pour l'expéditeur : une adresse e-mail (AEML) et un numéro de téléphone mobile (TMOB) pour répondre à la notification pour validation de l'expédition ;
   ∘ Pour le destinataire : une adresse e-mail (AEML) et un numéro de téléphone mobile (TMOB) pour répondre à la notification pour validation de l'expédition ;
   ∘ Pour le couple expéditeur/destinataire : Adresse postale et/ou e Fax pour adresser les correspondances en cas de défaut des informations précédentes.
- Le type de réseau pour chaque couple expéditeur/destinataire : le serveur BPG doit identifier sur quel type de réseau il fera l'ordonnancement (voir plus loin dans la description) ;
- Le N° de Correspondance pour chaque couple expéditeur/destinataire d'une correspondance : chaque pli de correspondance à faire réaliser par le/les OPET de l'expéditeur et par le/les OPET du destinataire (par exemple pour formaliser l'accusé de réception) reçoit un N° de correspondance particulier.
2^{ème} sous étape de la 3^{ème} étape d'une session de type S₁: PSD © de COMPLETUDE/Production du tableau TOCC

La vérification de complétude est effectuée sur le contenu de chaque remise de fichier à traiter: FIO = « Fichier Descriptor » et « Fichiers Contenus ». Elle consiste à vérifier que la présentation du fichier est conforme à celle mentionnée dans le cahier des charges du TYPCO. Pour traiter chaque correspondance, l'expéditeur doit respecter une présentation qui dépend du type de correspondance choisi pour chaque destinataire. Selon le type de correspondance, des informations seront nécessaires pour faire réaliser la dématérialisation de la correspondance et de l'archivage.

C'est dans la liste des types de correspondance et dans la CCU que l'on trouve toutes informations qui sont prescrites par les OPET et par le PSC-COR. Dans un mode de réalisation de l'invention, ces vérifications consistent à :
- Contrôler dans le FD (fichier structuré), qu'il n'existe aucune omission d'information (syntaxe) : désignation de la prestation modèle sur la liste des TYPCO (20 Types de correspondance dans un mode de réalisation préféré) bénéficiant d'une certification de la valeur probante ; référence de chaque fichier de correspondance (texte) et mention du destinataire, avec son adresse éventuellement ;
- Contrôler dans le FC de chaque correspondance que certaines mentions obligatoires ont bien été indiquées par l'expéditeur dans sa remise.

En sortie de cette sous étape, le serveur de l'opérateur PSD produit un TOCC qui regroupe, pour tous les FIO remis, les différentes données vérifiées qui seront nécessaires à l'ordonnancement des opérations de correspondance électronique sécurisée.
3^{ème} sous étape de la 3^{ème} étape d'une session de type S₁ : JN de Validation

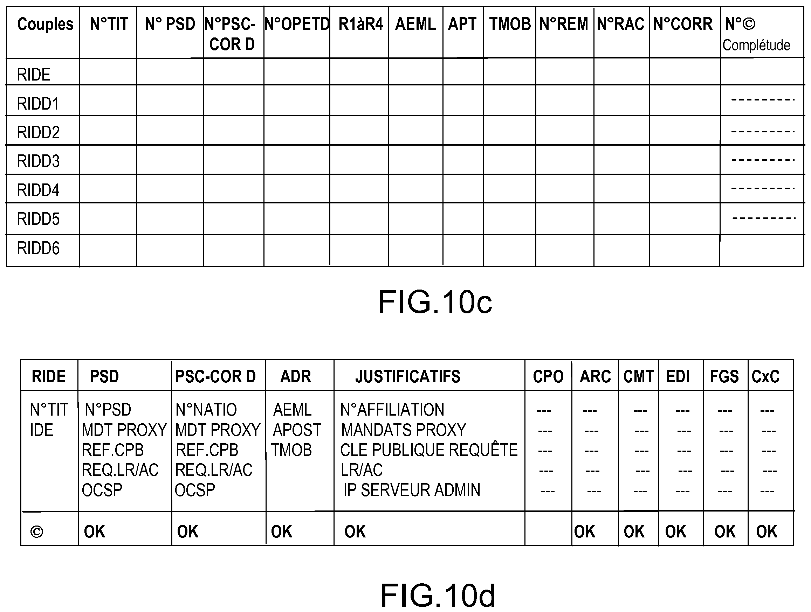

Il s'agit d'éditer un JN de Validation du TOCC pour les correspondances contrôlées positivement. Les contrôles négatifs feront l'objet ultérieurement d'une notification à l'expéditeur à l'occasion de l'acquittement ou de l'accusé de réception qu'il reçoit in fine du BPG qui a traité sa demande de correspondance. Un JN de Validation se présente par exemple comme le tableau de la figure 10c. Le tableau se remplit pour chaque Type de Correspondance (TYPCO). Le JN de Validation sert à lister les couples expéditeur/destinataire de correspondance qui sont conformes au cahier des charges prévu pour chaque TYPCO ou prestation modèle (PM). Chaque TYPCO se définit comme une Prestation Modèle (PM) partant d'un fichier simple ou d'un Fichier de Données Structurées (FDS) dont les mentions obligatoires sont connues des parties en correspondance dans le système de l'invention (mentions définies dans une annexe à la CCB. En fonction des PM, le PSC-COR détermine les jetons et les tables qui doivent être transférées au PSD et aux OPET. Si les informations de routage ou d'adressage sont inconnues du BPG de l'expéditeur, elles seront complétés par le PSC-COR dès lors que les destinataires et/ou OPET sont enregistrés dans son réseau.

En sortie de cette 3^{ème} étape d'une session de type S₁, qui est effectuée par le serveur BPG, le relais est pris par le PSC-COR de l'expéditeur.

Au cours d'une 4^{ème} étape d'une session de type S₁, le PSC-COR vérifie que les informations de routage ou chemin de confiance pour chaque destinataire sont justes et complète la partie des informations manquantes dont il dispose (notamment RID des destinataires et OPET qui lui sont rattachés avec des contrats valides). Le PSC-COR va aussi valider les notations des identités numériques des destinataires pour confirmer qu'actuellement, pour chaque couple de correspondance, la somme des deux notations (expéditeur et destinataire) est suffisante pour le type de correspondance demandé.

Le PSC-COR valide également les pouvoirs et autres attributs de confiance au long de la chaîne de confiance conduisant à chaque destinataire. Ces validations de la 4^{ème} étape d'une session de type S₁ s'opèrent sur un tableau qui peut prendre la forme de l'exemple illustré sur la figure 10d. Ce TOCC est communiqué par le serveur BPG au PSC-COR de l'expéditeur en sortie de l'étape précédente. Ce tableau est complété, et éventuellement corrigé, par ledit PSC-COR, Celui-ci tient un annuaire national des RID en connaissant pour chaque titulaire d'un CCC, sa notation d'identité numérique (qui est dynamique puisqu'elle peut changer sous certaines conditions après l'enregistrement ou en fonction du niveau de trafic effectué sur l'année). Le PSC-COR « synchronise» également pour chaque couple expéditeur/destinataire les requêtes auprès de leurs PSCE-SE (s'ils utilisent une signature électronique) et auprès de ceux qui ont enregistré les signatures électroniques des OPET qui utiliseront nécessairement des signatures électroniques sur les prestations qui leur sont confiées. Le PSC-COR vérifie régulièrement que les signatures électroniques qui interviennent dans le processus de dématérialisation établi pour le type de correspondance à mettre en œuvre pour chaque couple expéditeur/destinataire, sont bien valides. Ces signatures sont celles utilisées par le PSC-COR pour signer chaque session et la délivrance de jetons, celles utilisées par les BPG expéditeur pour le procès verbal d'envoi, et BPG destinataires pour le procès verbal de réception, celles utilisées par les OPET expéditeur pour le scellement, l'archivage, et éventuellement le transfert sécurisé du document, et OPET destinataires pour le scellement, l'archivage, et éventuellement le transfert sécurisé de l'AR.

Le PSC-COR synchronise également la session avec un PSCE-HD afin d'établir une marque de temps sur le début de la session qu'il a validé. Le PSC-COR de l'expéditeur vérifie ensuite les N° d'affiliation de chaque OPET intervenant dans les prestations de services de dématérialisation pour réaliser les tâches de composition, d'ampliation, d'archivage, de commutation, et de transmission aussi bien pour le document de correspondance que pour celui de l'accusé de réception.

Ainsi, le PSC-COR vérifie que tous les mandats et procurations de scellement sont bien en vigueur au moment où les OPET vont recevoir les instructions des BPG pour le compte de leurs adhérents, d'un coté l'expéditeur, et de l'autre les destinataires. Cette vérification s'effectue comme indiqué ci-dessus en commentaire à la figure 2. Dans un mode de réalisation de l'invention, l'ensemble des vérifications opérées jusqu'ici dans cette étape, produit un Tableau d'Enrôlement de Correspondance Bilatérale (TECB).

Enfin, le PSC-COR de l'expéditeur vérifie qu'il a connaissance de toutes les adresses IP des serveurs de communication intégrés dans les fonctions de dématérialisation des OPET, des Annuaires, des PSD et des autres PSC-COR. En effet pour automatiser les échanges de données qui accompagnent chaque type de correspondance dans son exécution, il est nécessaire de vérifier à l'avance qu'on a bien toutes les adresses IP nécessaires. Dans un mode de réalisation de l'invention, cette vérification produit une Matrice de Connectivité Inter Services (MCIS)

L'édition d'un journal de validation matérialise les vérifications effectuées lors de cette 4^{ème} étape d'une session de type S₁. Ce journal liste les couples de correspondance indiqués avec leur N° de correspondance en indiquant chaque fois la conformité formelle et les éventuelles anomalies bloquantes ou non pour le lancement du traitement par le serveur BPG de l'expéditeur. Un exemple de journal de ce type est représenté sur la figure 10e, qui reprend le même format que celui du JN de Validation de la figure 10d établi par le serveur BPG en sortie de la 3^{ème} sous étape de la 3^{ème} étape d'une session de type S₁. Les informations figurant dans ce journal de validation portent la marque de validation par le PSC-COR.

Au cours d'une 5^{ème} étape d'une session de type S₁, le PSC-COR établit une Matrice de Valeur Probante Documentaire (MVPD).

Ledit PSC-COR crée pour chaque ligne de correspondance dont les parties prenantes ont des attributs de confiance exhaustifs et conformes à la règlementation (tels que vérifiés en sortie de la 4^{ème} étape), et pour chaque type de correspondance bilatérale, les jetons J définis en commentaires aux figures 2 et 3 qui sont nécessaires pour administrer les preuves de dématérialisation pour le TYPCO en cours.

La MVPD permet de satisfaire aux obligations légales de valeur probante des correspondances dématérialisées dès lors qu'elle est dotée par le PSC-COR des jetons nécessaires aux opérations de la chaîne de dématérialisation propres à chaque type de correspondance. Ce mode d'administration de la preuve est sécurisé car les jetons J transitent à l'aller et au retour par un réseau de communication entre PSC-COR, Annuaires, PSD et OPET en utilisant le protocole de communication sécurisé décrit plus loin.

Ces jetons, affectés à chaque ligne de correspondance et fonction du modèle de correspondance choisi par l'expéditeur (TYPCO), sont transmis au BPG de l'expéditeur. Ils seront adressés au moment de l'ordonnancement des opérations de traitement des correspondances électroniques à ou aux OPET concernés pour mise à exécution.

Si, comme c'est souvent le cas, le/les OPET du destinataire sont mis à contribution, pour composer, archiver et commuter des coupons de gestion (documents secondaires rattachés au document principal de la correspondance électronique), tels qu'un AR, le PSC-COR divise en deux sa Matrice de Valeur Probante Documentaire MVPD, et donc ses jetons de valeur probante :
- Une matrice dédiée au Serveur BPG de l'expéditeur : n jetons
- Une matrice dédiée au Serveur BPG du destinataire : p jetons

Il y a en outre deux jetons supplémentaires et collectifs (un jeton collectif est un jeton qui n'est pas attaché à un document mais à une suite de documents stockés en cours de validation du côté de l'expéditeur d'abord et du côté du destinataire ensuite) créés l'un par une session de type S₂ pour le PVE (Procès-verbal d'Expédition) et l'autre par une session de type S₃ pour le PVR (Procès-verbal de Réception).

Au cours d'une 6^{ème} étape d'une session de type S₁, le PSC-COR adresse au serveur PSD de l'expéditeur (dans son BPG), pour chaque couple de correspondance, et pour chaque type de correspondance, une ligne autorisant l'ordonnancement des opérations de traitement. Cette ligne comprend chaque jeton à remettre à chaque OPET impliqué dans le processus de dématérialisation. Toutes les informations concernant les signatures, les domiciliations, les mandats et procurations, les notations du couple expéditeur/destinataire sont indiquées. S'il manque un élément, ce défaut est notifié au BPG de l'expéditeur.

Si le PSD, les OPET ou le PSC-COR du destinataire sont mis à contribution, notamment pour dématérialiser l'accusé de réception d'un N° de correspondance, le PSC-COR adresse également une ligne autorisant l'ordonnancement par le PSD du destinataire aux OPET du destinataire. Cette ligne comprend chaque jeton à remettre à chaque opérateur impliqué dans le processus de dématérialisation.

Dans un mode privilégié de réalisation de l'invention, en fonction de la complexité de chaque type de correspondance, il y a pour chaque correspondance bilatérale, entre 5 et 15 jetons qui peuvent être créées par le PSC-COR de l'expéditeur et envoyés à l'opérateur PSD EXP ou aux deux opérateurs PSD EXP et PSD DES. Ces jetons sont acheminés par les serveurs PSD aux OPET qui agissent pour le compte de leurs adhérents respectifs dans l'opération de correspondance électronique objet de la session. Les OPET doivent faire retour auxdits serveurs PSD desdits jetons avec la référence de la ligne de journalisation des opérations qu'ils ont effectuées.

Les tableaux/matrices récapitulatifs des caractéristiques de toutes les correspondances est envoyé par le PSC-COR (TECB+MVPD) au serveur PSD de l'expéditeur. Ces tableaux/matrices comprennent les caractéristiques des prestataires désignés par l'expéditeur et par chacun des destinataires. Ces caractéristiques consistent essentiellement à indiquer les mandats, les procurations de scellement, les validités des signatures activées, les adresses IP des serveurs, ainsi que les jetons correspondants pour les OPET pour chacune de leurs opérations spécifiques. Le PSC-COR de l'expéditeur envoie les jetons en plusieurs matrices de correspondance sécurisée, l'une au serveur PSD de l'expéditeur, et les autres aux serveurs PSD des destinataires qui sont chargés notamment de la dématérialisation des coupons AR Accusé de réception.

Chaque PSD, qu'il soit concerné par l'expéditeur ou par un destinataire, reçoit donc sa matrice de jetons de correspondance avant même que l'ordonnancement ne soit encore engagé par le serveur PSD de l'expéditeur sur l'OPET désigné pour un ou plusieurs plis de correspondance.

La Matrice de Valeur Probante Documentaire MVPD dépend toujours de la complexité du type de correspondance à effectuer. Les jetons sont acheminés ensuite dans l'ordonnancement entre chaque serveur PSD/fonction ordonnancement et l'opérateur, et pour chaque OPET, entre ses différentes fonctions de dématérialisation. Il y a un jeton par nature d'opération : composition, archivage, commutation, transmission multi canal, transfert sécurisé.

A la réception de la MVPD , chaque serveur PSD renvoie un acquittement à l'utilisateur expéditeur/destinataire pour lui indiquer par couple et N° de correspondance les courriers qui sont acceptés, et ceux qui sont refusés pour les raisons ou les anomalies indiquées.

Les transmissions de jetons par les OPET seront initiées après ordonnancement de l'opération de correspondance électronique objet de la session en cours de type S₁ au cours des sessions qui, selon le TYPCO, doivent nécessairement suivre une session de type S₁. Les OPET chargés de cette transmission sont indiqués sur la figure 10f :
- En clair (J1 à J5 ; J6 ; J8 à J10 ; J12): initiés par une session de type S₂ (Session pour envoyer un PV d'expédition) par un des OPET de l'expéditeur (OPET1) ;
- En gras (J13 à J15 ; J15 à J18): initiés par une session de type S₃ (Session pour envoyer un PV de réception) par un des OPET de chaque destinataire (OPET2).

Un paramètre de complexité supplémentaire vient du fait que les prestations des OPET peuvent être soit délocalisées dans le pays de résidence de l'expéditeur ou des destinataires, soit centralisées dans un Shared Services Centre (SSC): on distingue alors l'OPEN (National) de l'OPEM (Mutualisé) ou SSC. Pour chaque type de prestation de correspondance, les opérations s'imputeront automatiquement entre les OPEN et les OPEM avec leurs serveurs PSD et PSC-COR de référence.

A la suite de la 6^{ème} étape d'une session de type S₁, au cours d'une 7^{ème} étape, le serveur PSD de l'expéditeur notifie à l'utilisateur/expéditeur la disponibilité des N correspondances validées par le PSC-COR pour qu'il puisse lui-même ou par l'intermédiaire de son mandataire, valider l'expédition desdites correspondances.

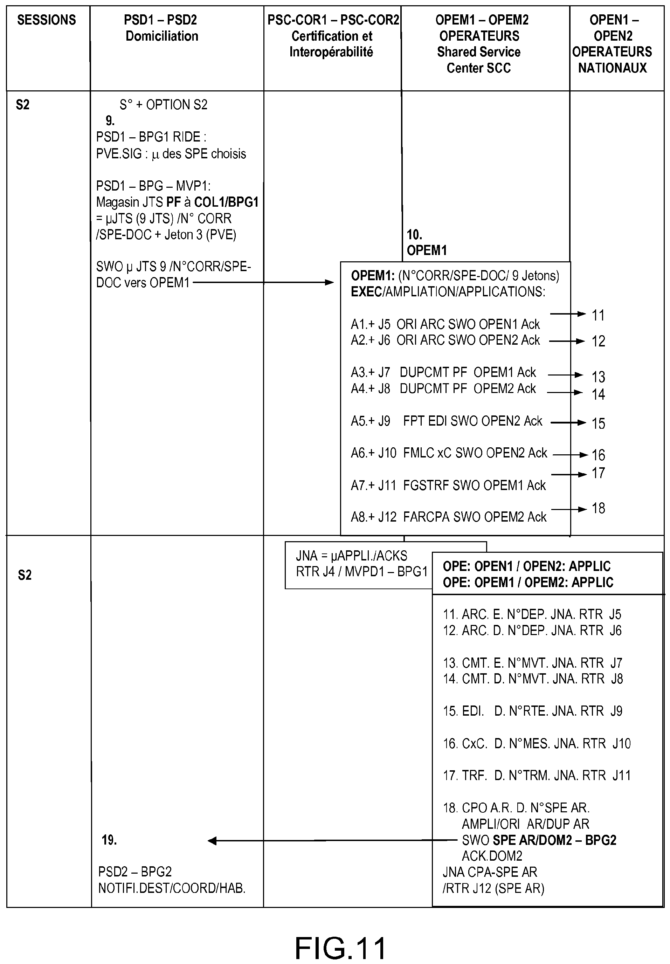

La figure 11 représente les flux de données gérés par une session de type S₂ dans un mode de réalisation de l'invention.

Lorsqu'il a reçu l'avis de disponibilité pour expédition de son serveur PSD, l'expéditeur doit initier une session de type S₂, en commençant par s'authentifier par une session de type S₀, substantiellement identique à celle décrite plus haut (en indiquant qu'il veut ouvrir une session de type S₂, ce qui limitera les contrôles effectués à ceux nécessités par une habilitation pour une session de ce type - habilitation H₂).

Une session de type S₂ menée à son terme constitue un ordre d'envoi par le serveur PSD de l'expéditeur des plis de correspondance qui ont été validés au cours d'une session précédente de type S₁. Un jeton PVE est créé au début cette session.

Au cours d'une 1^{ère} étape de la session de type S₂, l'expéditeur procède ensuite au choix de l'exécution des ordres de d'envoi des correspondances qu'il valide vers OPET1 avec les jetons créés en S₁.

Au cours d'une 2^{ème} étape de la session de type S₂, l'ordre d'expédition déclenche une opération de transfert Switch Out (SWO) du serveur PSD à OPET1 : N plis autorisés à l'envoi avec transfert des jetons correspondants. Au cours d'une 3^{ème} étape de la session de type S₂, cet ordre, une fois exécuté, déclenche un ACK avec journalisation du retour du jeton PVE de la session de type S₂. Les jetons suivent ensuite la chaîne de confiance par transfert SWO de l'OPET de l'expéditeur chargé de la composition (OPET COMP) vers l'OPET de l'expéditeur chargé de l'ampliation (OPET-AMP), ce transfert étant immédiat et étant constitué de N plis validés, avec leurs jetons, suivant le modèle TYPCO de chaque correspondance.

Au cours d'une 4^{ème} étape de la session de type S₂, l'OPET1 en bout de chaîne, normalement celui chargé de la transmission envoie un ACK, journalise l'exécution de l'ordre et fait retour du jeton de session de type S₂ au serveur PSD1 qui le retourne au PSC-COR1.

Au cours d'une 5^{ème} étape de la session de type S₂, les OPET1 de l'expéditeur réalisent les opérations de traitement qui leur sont allouées sur les correspondances validées par l'expéditeur, notamment une ampliation. Après exécution des opérations de traitement qui lui sont allouées, chaque OPET1 effectue un transfert SWO des versions des correspondances qu'ils ont traitées et des jetons correspondants, le dit transfert étant immédiat ou différé (modèle TYPCO). Ces transferts après exécution déclenchent des ACK avec journalisation de l'exécution des opérations de traitement et un retour des jetons d'exécution correspondants à chaque opération au PSC-COR qui en fait retour au serveur PSD.

Au cours de cette 5^{ème} étape, sont également créés les AR pour les TYPCO qui les nécessitent. Cette création, subordonnée à la détention du jeton correspondant, est effectuée par l'OPET chargé de la composition (OPET-COMP2 du côté de chaque destinataire). Le jeton correspondant est envoyé aux serveurs PSD2 de tous les destinataires. Chaque destinataire déclaré dans le système comme pouvant recevoir des correspondances électroniques reçoit une notification de son serveur PSD2 par e-mail.

Après exécution de cette dernière étape d'une session de type S₂, les serveurs PSD1 et PSC-COR1 sont normalement en possession (sauf anomalie dans la chaîne des traitements) des jetons expéditeur. En fonction du TYPCO, il reste maintenant au PSC-COR1 à recevoir les jetons validant la réception par les destinataires pour pouvoir délivrer ses certificats de valeur probante. C'est l'objet des sessions de type S₃ qui vont maintenant être décrites.

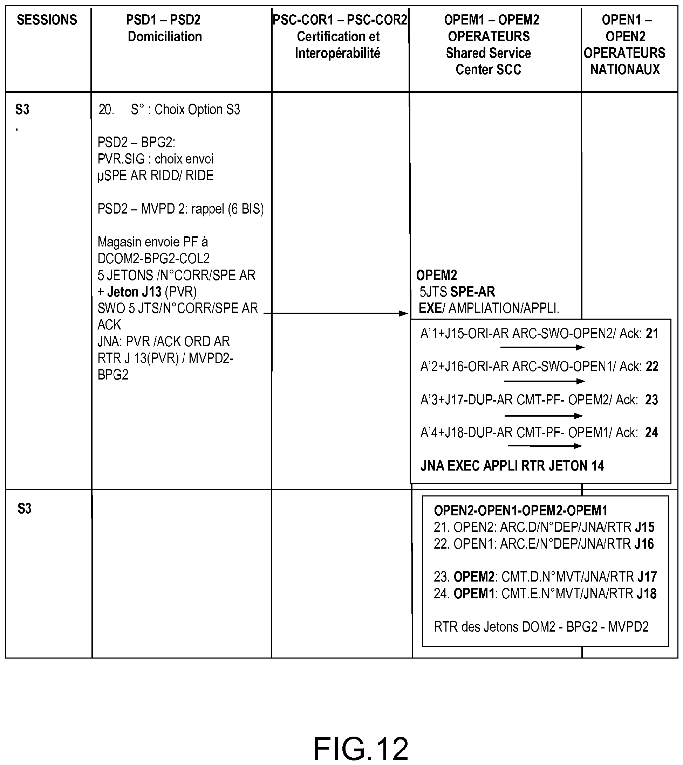

La figure 12 représente les flux de données gérés par une session de type S₃ dans un mode de réalisation de l'invention.

Un destinataire d'une correspondance expédiée par le système de l'invention, qui, en vertu des contrôles effectués avant expédition, a été reconnu comme en capacité de recevoir lesdites correspondances par voie électronique reçoit de son serveur PSD2 un avis de mise à disposition des correspondances qui lui sont destinées. Si, en revanche, les contrôles ont montré qu'il n'était pas en mesure de recevoir lesdites correspondances par voie électronique, il les recevra par la poste ou par fax (si ses données de domiciliation adéquates figuraient dans l'Annuaire de l'expéditeur.

Dans le 1^{er} cas (correspondance électronique remise), il convient de distinguer selon le TYPCO si un AR est nécessaire. Si ça n'est pas le cas, le destinataire peut se contenter de consulter les correspondances reçues sur son BPG2 par une session de type S₄, qui sera décrite de manière succincte plus loin dans la description.

Dans le 2^{ème} cas, le destinataire doit initier une session de type S₃ en commençant par s'authentifier par une session de type S₀, substantiellement identique à celle décrite plus haut (sauf qu'il déclare vouloir réaliser une session de type S₃ et que seuls les contrôles nécessités par une habilitation pour une session de ce type seront exécutés - habilitation H₃).

La session reçoit un numéro d'instance du BPG du destinataire et un numéro de session de son PSC-COR. Le destinataire peut choisir dans son BPG les correspondances dont il souhaite accuser réception en activant les jetons qui ont été placés en instance pour subordonner à sa validation la création des AR spécifiques confiée à son OPET-COMP. Un jeton de PV d'expédition est créé pour l'ensemble des correspondances dont il souhaite signer l'AR.. L'ordre d'expédition de chaque AR est transféré (SWO) par le BPG2 aux OPET2 compétents qui réalisent les opérations de traitement de ces AR. Après réalisation, un ACK et une journalisation d'exécution sont réalisées, avec retour du jeton de session S₃.

Les sessions de types S₄, S₅ et S₆ sont moins complexes que les précédentes. Elles ne seront donc pas décrites de manière détaillée.

Une session de type S₄ est destinée à permettre la consultation des correspondances électroniques émises et reçues par un utilisateur sur son BPG. Comme pour tous les autres types de session, une session de type S₄ doit être initiée par une session de type S₀, mais l'habilitation (H₄) nécessaire est beaucoup moins lourde que pour une session de type S₁. Une session de type S₅ est destinée à permettre à un utilisateur de remettre à son BPG des documents électroniques qu'il souhaite archiver. En règle générale, un jeton par dépôt d'archive est associé à cette session. Les modalités d'archivage privilégiées dans le cadre de la mise en œuvre du système de l'invention sont décrites dans deux brevets déposés le 29 mars 2009 par la demanderesse de la présente demande (N° de dépôt auprès de l'INPI : FR09/1441 et FR09/1442). L'opération d'archivage fait intervenir un OPET, normalement spécialisé dans ce type d'opérations, qui signera le dépôt avec sa signature électronique. L'archivage peut être effectué en mode crypté. La validation de la remise suppose le contrôle de toutes les informations relatives à l'OPET archiveur, comme pour tous les autres OPET, notamment son habilitation, la validité de sa signature électronique, son adresse IP et les pouvoirs de ses mandataires.

Une fois que la remise des pièces à archiver est validée, une session de type S₆ est ouverte, dans les mêmes conditions que pour les autres types de session, pour que l'utilisateur puisse signer l'archivage des pièces validées. Cette session donne normalement lieu à la création d'un seul jeton pour la session.

Le système de l'invention peut être mis en œuvre en prévoyant des serveurs du commerce, dont les performances doivent être dimensionnées en fonction des flux à traiter par le système. C'est également le cas des dispositifs de stockage en ligne et d'archivage hors ligne. Il est nécessaire de prévoir les redondances permettant de remplir les obligations de qualité de service prévues dans les conventions avec les utilisateurs. Les centres de traitement informatique hébergeant ces serveurs et dispositifs de stockage doivent être dotées des dispositifs et procédures de sécurité conformes aux règles de l'art qui permettent de garantir leur intégrité contre les attaques physiques ou informatiques.

L'architecture physique du réseau de communication qui relient les différents serveurs et dispositifs de stockage doit répondre aux mêmes impératifs, mais peut être conçue, déployée et opérée par un homme de l'art. Elle doit être définie pour optimiser les flux et les stockages de données, ce qui peut conduire à avoir plusieurs serveurs pour chaque niveau de l'architecture fonctionnelle décrite en commentaire à la figure 1. L'architecture logique du réseau reliant les serveurs hébergeant les Annuaires, les serveurs des PSD, des OPET et des PSC-COR doit cependant répondre, pour une mise en œuvre privilégiée du système de l'invention, à un cahier des charges, qui a été évoqué à plusieurs reprises et qui est détaillé dans les paragraphes qui suivent.

Le protocole de communication mis en œuvre dans le système de l'invention est prescrit à titre principal par un cahier des charges établi par un ou plusieurs PSC-COR. Les éléments principaux d'un cahier des charges conforme aux prescriptions de la présente invention comporte les caractéristiques suivantes :
- Chaque serveur hébergeur d'un Annuaire, des fonctions d'un PSD, des fonctions d'un OPET et des fonctions d'un PSC-COR dispose d'un module de communication ayant un identifiant unique attaché à son adresse IP, éventuellement complété par un mot de passe contrôlant les entrées et les sorties ;
- Les liaisons entre les serveurs sont établies par la MCIS désignant les relations bijectives autorisées, et éventuellement, précisant les transmissions univoques ou biunivoques ;
- Le PSC-COR doit pouvoir recevoir un accusé de réception signé pour toute communication sécurisée qu'elle établit avec tous les serveurs hébergeurs d'Annuaires, de fonctions d'un PSD et de fonctions des OPET ; à cet effet, chaque communication est soumise à une signature électronique utilisant un bi clé symétrique et nécessitant des contreparties de la communication un AR ou ACK (acknowledgement) ; l'AR peut être soumis à une confirmation circonstanciée prouvant que le fichier a été ouvert, contrôlé en terme d'intégrité, et contrôlé en terme de conformité (vérification dans le fichier structuré transporté que les mentions obligatoires existent bien à l'arrivée) ;
- Tant que la confirmation de réception n'est pas reçue, l'expéditeur du fichier a l'interdiction de le détruire.

Par ailleurs, dans le réseau de communication prévu pour mettre en œuvre le système de l'invention, sont définis des sous réseaux qui déterminent les modalités du routage des correspondances, des jetons et des tableaux de validation entre les différents serveurs impliqués dans les opérations de correspondance électronique sécurisées et les modalités de validation dudit routage dans les sessions ouvertes pour effectuer une remise, une expédition ou une réception de correspondance électronique sécurisée. Le sous réseau approprié est défini pour chaque session de correspondance. Dans un mode privilégié de réalisation de l'invention, on définit 4 sous réseaux qui sont notés R₁ à R₄ :
- R₁ : L'expéditeur et tous les destinataires sont rattachés à un même PSD, utilisent le même OPET et le même PSC-COR;
- R₂ : Il y a au moins deux PSD différents qui doivent intervenir dans l'opération de correspondance électronique sécurisée ; les OPET et PSC-COR sont communs ;
- R₃ : Il y a au moins deux PSD différents qui doivent intervenir dans l'opération de correspondance électronique sécurisée ; il y a au moins deux OPET ; le PSC-COR est commun;
- R₄ : Il y a au moins deux PSD différents qui doivent intervenir dans l'opération de correspondance électronique sécurisée ; il y a au moins deux OPET ; il y a au moins deux PSC-COR.

Dans le sous réseau R₁, un seul serveur hébergeur d'Annuaire dispose de toutes les informations relatives aux parties à l'opération de correspondance électronique sécurisée. Dans les sous réseaux R₂ et R₃, au moins deux serveurs hébergeurs d'Annuaires sont nécessaires pour disposer de ces informations, ces serveurs hébergeurs d'Annuaires étant interrogés par le PSC-COR commun. Dans le cas du sous réseau R₄, un protocole de centralisation des serveurs hébergeurs d'Annuaires doit avoir été défini entre les PSC-COR concernées. Une des modalités est de prévoir un « super » PSC-COR ayant cette compétence pour plusieurs pays.

Les exemples décrits ci-dessus sont donnés à titre d'illustration de modes de réalisation de l'invention. Ils ne limitent en aucune manière le champ de l'invention qui est défini par les revendications qui suivent.
- R₄ : Il y a au moins deux PSD différents qui doivent intervenir dans l'opération de correspondance électronique sécurisée ; il y a au moins deux OPET ; il y a au moins deux PSC-COR.

Dans le sous réseau R₁, un seul serveur hébergeur d'Annuaire dispose de toutes les informations relatives aux parties à l'opération de correspondance électronique sécurisée. Dans les sous réseaux R₂ et R₃, au moins deux serveurs hébergeurs d'Annuaires sont nécessaires pour disposer de ces informations, ces serveurs hébergeurs d'Annuaires étant interrogés par le PSC-COR commun. Dans le cas du sous réseau R₄, un protocole de centralisation des serveurs hébergeurs d'Annuaires doit avoir été défini entre les PSC-COR concernées. Une des modalités est de prévoir un « super » PSC-COR ayant cette compétence pour plusieurs pays.

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Système de gestion de sessions de correspondance électronique sécurisée entre au moins un utilisateur expéditeur (1101) et au moins un utilisateur destinataire (1102), ledit système comprenant :
- au moins un serveur annuaire (1200, 1201, 1202),
- au moins un serveur de domiciliation de correspondances électroniques (1300, 1301, 1302) comprenant un bureau privé de gestion (1310, 1311,1312) pour chaque utilisateur, notamment pour choisir au moins une contrepartie de correspondance, valider le contenu de la correspondance à envoyer et stocker la correspondance une fois envoyée,
- au moins un serveur de traitement desdites correspondances (1700,1701, 1702), et au moins un serveur de certification de correspondances électroniques (1500, 1501,1502),
ledit système étant **caractérisé en ce que** :
- ledit au moins un serveur de domiciliation (1300, 1301,1302) comprend en outre au moins un module de gestion de sessions de correspondance électronique (1340, 1341, 1342) comprenant au moins un sous module d'autorisation d'ouverture de session entre un utilisateur (1101, 1102) et son bureau privé de gestion (1310, 1311, 1312) sous condition de vérification par requête avant ladite ouverture auprès d'au moins un serveur de certification (1500, 1501, 1502) que la somme des notations des identités numériques dudit utilisateur (1101, 1102), et de sa contrepartie (1102, 1101) est supérieure à un seuil fixé par un prestataire de services de certification de correspondance, PSC-COR, qui gère ledit au moins un serveur de certification (1500,1501,1502);
- et **en ce que** ledit sous module d'ouverture de session est configuré pour exécuter une fonction d'authentification forte d'un utilisateur dudit système par vérification de l'identité d'un code fourni par ledit utilisateur audit serveur de domiciliation avec un secret unique transmis sous deux formes différentes par le serveur de certification, d'une part au serveur de domiciliation et d'autre part audit utilisateur, cette deuxième transmission s'effectuant sur un canal de communication différent de celui par lequel l'utilisateur se connecte au serveur de gestion, la sortie de ladite fonction d'authentification forte conditionnant une poursuite de l'ouverture de la session.

2. Système de gestion de sessions de correspondance électronique sécurisée selon la revendication 1, dans lequel la dite fonction d'authentification transmet ledit secret au serveur de domiciliation sous forme d'une information calculée à partir dudit secret généré par le serveur de certification et d'au moins une donnée caractéristique de la session en cours d'ouverture créée par le serveur de domiciliation et transmise au serveur de certification.

3. Système de gestion de sessions de correspondance électronique sécurisée selon la revendication 2, dans lequel ladite information est un numéro d'enrôlement attaché à ladite session et calculée en effectuant le produit dudit secret et d'un numéro d'ordre de la session en cours d'ouverture.

4. Système de gestion de sessions de correspondance électronique sécurisée selon l'une des revendications 1 à 3, dans lequel l'utilisateur expéditeur peut inviter au moins un utilisateur destinataire à s'enregistrer sur un serveur de domiciliation proposé dans une liste comprenant au moins un élément.

5. Système de gestion de sessions de correspondance électronique sécurisée selon la revendication 4, comprenant en outre un module d'enregistrement d'utilisateurs invités, ledit module offrant audit utilisateur invité la possibilité de fournir au moins des informations relatives à ses attributs d'identification et d'adressage physique et électronique comportant au moins un numéro de téléphone mobile.

6. Système de gestion de sessions de correspondance électronique sécurisée selon la revendication 4, dans lequel ledit module d'enregistrement offre en outre à l'utilisateur la possibilité d'adhérer à une convention de correspondance universelle proposée par le serveur de domiciliation choisi et à une convention de correspondance bilatérale proposée par l'utilisateur invitant.

7. Système de gestion de sessions de correspondance électronique sécurisée selon l'une des revendications 4 à 6, dans lequel ledit module d'enregistrement propose en outre à l'utilisateur en cours d'enregistrement la fourniture de preuves matérielles de au moins une partie des informations d'identification et d'adressage qu'il a fourni audit module et n'accepte son enregistrement qu'après réception et contrôle de la conformité desdites preuves aux informations fournies audit module.

8. Système de gestion de sessions de correspondance électronique sécurisée selon l'une des revendications 1 à 7, dans lequel le serveur de certification comprend une base de données des signatures électroniques non répudiées des utilisateurs, des opérateurs de domiciliation, des opérateurs de traitement et des opérateurs de certification, ladite base de données étant mise à jour auprès des prestataires émetteurs desdites signatures à un fréquence calculée en fonction d'une statistique de répudiation desdites signatures et d'une statistique de flux de correspondances électroniques.

9. Système de gestion de sessions de correspondance électronique sécurisée selon l'une des revendications 1 à 8, dans lequel ledit module de gestion de sessions comprend en outre un sous module de gestion des remises de correspondance à expédier dans le bureau privé de gestion d'un utilisateur.

10. Système de gestion de sessions de correspondance électronique sécurisée selon la revendication 9, dans lequel ledit sous module de gestion des remises est configuré pour refuser une remise de correspondance si un critère de notation du couple expéditeur/destinataire de ladite correspondance est inférieur à un seuil de notation prescrit par l'opérateur de certification.

11. Système de gestion de sessions de correspondance électronique sécurisée selon la revendication 9, dans lequel ledit sous module de gestion des remises comprend une fonction de création d'un tableau d'ordre de correspondance consolidé regroupant, pour chaque destinataire leurs données validées d'adressage, les références des fichiers validés à expédier, les numéros d'ordre de chaque ligne de correspondance.

12. Système de gestion de sessions de correspondance électronique sécurisée selon la revendication 11, dans lequel ledit sous module de gestion des remises comprend, en sortie de ladite fonction de création d'un tableau d'ordre de correspondance consolidé, une fonction d'édition d'un journal horodaté de validation de ladite création.

13. Système de gestion de sessions de correspondance électronique sécurisée selon la revendication 11, dans lequel ledit sous module de gestion des remises comprend, en sortie de ladite fonction de création d'un tableau d'ordre de correspondance consolidé, une fonction d'envoi d'un message au serveur de certification, ledit message comprenant ledit tableau d'ordre de correspondance consolidé, puis une fonction de réception d'un message dudit serveur de certification, ledit message comprenant un tableau d'ordre de correspondance consolidé corrigé et validé par ledit serveur de certification.

14. Système de gestion de sessions de correspondance électronique sécurisée selon la revendication 9, dans lequel ledit sous module de gestion des remises comprend une fonction de gestion de jetons de certification de l'exécution d'opérations de traitement à effectuer sur chaque correspondance électronique.

15. Système de gestion de sessions de correspondance électronique sécurisée selon la revendication 14, dans lequel ladite fonction de gestion de jetons de certification est configuré pour recevoir lesdits jetons du serveur de certification dans une matrice de valeur probante documentaire au serveur de domiciliation, ladite matrice comprenant tous les jetons nécessaires à la certification des correspondances expédiées ou reçues pendant la session en cours par l'opérateur de certification.

16. Système de gestion de sessions de correspondance électronique sécurisée selon la revendication 15, dans lequel ladite fonction de gestion de jetons de certification est configuré pour router les jetons reçus aux opérateurs de traitement.

17. Système de gestion de sessions de correspondance électronique sécurisée selon la revendication 16, dans lequel ladite fonction de gestion de jetons de certification est configuré pour recevoir du serveur de certification un message comprenant les jetons de certification des opérations de traitement qui se sont déroulées en conformité avec le cahier des charges de l'opérateur de certification.

18. Système de gestion de sessions de correspondance électronique sécurisée selon l'une des revendications 1 à 17, dans lequel ledit module de gestion de sessions comprend en outre un sous module de validation par l'utilisateur ou un mandataire désigné par lui de l'expédition à ses destinataires des correspondances électroniques.

19. Système de gestion de sessions de correspondance électronique sécurisée selon la revendication 18, dans lequel ledit sous module de validation comprend une fonction d'édition d'un journal de validation indiquant la complétude des contrôles effectués avant validation.

20. Système de gestion de sessions de correspondance électronique sécurisée selon la revendication 18, dans lequel ledit sous module de validation comprend une fonction d'édition d'une table de validation des attributs de confiance de chaque utilisateur destinataire.

21. Système de gestion de sessions de correspondance électronique sécurisée selon l'une des revendications 18 à 20, dans lequel ledit sous module de validation comprend une fonction de scellement des dites correspondances électroniques.

22. Système de gestion de sessions de correspondance électronique sécurisée selon l'une des revendications 1 à 21, dans lequel ledit module de gestion de sessions comprend en outre un sous module de gestion des accusés de réception des correspondances électroniques.

23. Système de gestion de sessions de correspondance électronique sécurisée selon l'une des revendications 1 à 22, dans lequel ledit module de gestion de sessions comprend en outre un sous module de gestion des communications entre utilisateurs dudit système, ledit module étant configuré pour opérer un choix de chemin de routage sécurisé à partir d'informations relatives au serveur de domiciliation et au serveur de certification auxquels sont abonnés les utilisateurs expéditeurs , les utilisateurs destinataires, les opérateurs de traitement desdites correspondances électroniques et les opérateurs de certification.

24. Système de gestion de sessions de correspondance électronique sécurisée selon la revendication 23, dans lequel ledit sous module de gestion des communications entre utilisateurs dudit système est configuré pour produire un choix entre un premier type de chemins de routage lorsqu'un expéditeur et un destinataire utilisent un seul opérateur de domiciliation, un seul opérateur de traitement et un seul opérateur de certification, un deuxième type de chemins de routage lorsqu'un expéditeur et un destinataire utilisent aux moins deux serveurs de domiciliation, un seul opérateur de traitement et un seul opérateur de certification, un troisième type de chemins de routage lorsqu'un expéditeur et un destinataire utilisent aux moins deux serveurs de domiciliation différents, au moins deux opérateurs de traitement et un seul opérateur de certification, et un quatrième type de chemins de routage pour des serveurs de certification différents lorsqu'un expéditeur et un destinataire utilisent aux moins deux serveurs de domiciliation différents, au moins deux opérateurs de traitement et au moins deux opérateurs de certification.

25. Procédé de gestion de sessions de correspondance électronique sécurisée entre au moins un utilisateur expéditeur (1101) et au moins un utilisateur destinataire (1102), ledit procédé comprenant :
- une étape de connexion à au moins un serveur annuaire (1200, 1201, 1202),
- au moins une étape de connexion à un serveur de domiciliation de correspondances électroniques (1300, 1301, 1302), ledit serveur de domiciliation des correspondances électroniques comprenant un bureau privé de gestion (1310, 1311,1312) pour chaque utilisateur, notamment pour choisir au moins une contrepartie de correspondance, au moins une étape de traitement desdites correspondances (1700,1701, 1702), pour valider le contenu de la correspondance à envoyer et stocker la correspondance une fois envoyée, et
- au moins une étape de connexion du serveur de domiciliation au serveur de certification de correspondances électroniques (1500, 1501,1502),
ledit procédé étant **caractérisé en ce que** :
- ladite étape de connexion au serveur de domiciliation (1300, 1301,1302) comprend en outre au moins une étape de gestion de sessions de correspondance électronique comprenant au moins une sous étape d'autorisation d'ouverture de session entre un utilisateur (1101, 1102) et son bureau privé de gestion (1310, 1311, 1312) sous condition de vérification par requête avant ladite ouverture auprès d'au moins un serveur de certification (1500, 1501, 1502) que la somme des notations des identités numériques dudit utilisateur (1101, 1102), et de sa contrepartie (1102, 1101) est supérieure à un seuil fixé par un prestataire de services de certification de correspondance, PSC-COR, qui gère ledit au moins un serveur de certification (1500,1501,1502);
- et **en ce que** ladite sous-étape d'autorisation d'ouverture de session comprend une sous-étape d'exécution d'une fonction d'authentification forte d'un utilisateur dudit système par vérification de l'identité d'un code fourni par ledit utilisateur audit serveur de domiciliation avec un secret unique transmis sous deux formes différentes par le serveur de certification, d'une part au serveur de domiciliation et d'autre part audit utilisateur, cette deuxième transmission s'effectuant sur un canal de communication différent de celui par lequel l'utilisateur se connecte au serveur de gestion, la sortie de ladite fonction d'authentification forte conditionnant une poursuite de l'ouverture de la session.

26. Procédé de gestion de sessions de correspondance électronique sécurisée selon la revendication 25, dans lequel ladite étape de gestion de sessions de correspondance électronique comprend en outre une sous étape de gestion des remises de correspondance à expédier dans le bureau privé de gestion d'un utilisateur.

27. Procédé de gestion de sessions de correspondance électronique sécurisée selon la revendication 25, dans lequel ladite étape de gestion de sessions de correspondance électronique comprend en outre une sous étape de validation par l'utilisateur ou un mandataire désigné par lui de l'expédition à ses destinataires des correspondances électroniques.

28. Procédé de gestion de sessions de correspondance électronique sécurisée selon la revendication 25, dans lequel ladite étape de gestion de sessions de correspondance électronique comprend en outre une sous étape de gestion des communications entre utilisateurs dudit système, ladite sous étape étant configuré pour opérer un choix de chemin de routage sécurisé à partir d'informations relatives au serveur de domiciliation et au serveur de certification auxquels sont abonnés les utilisateurs expéditeurs , les utilisateurs destinataires, les opérateurs de traitement desdites correspondances électroniques et les opérateurs de certification.

## Patentansprüche

1. System zum Verwalten sicherer E-Mail-Sitzungen zwischen mindestens einem sendenden Benutzer (1101) und mindestens einem empfangenden Benutzer (1102), wobei das System Folgendes umfasst:
- mindestens einen Verzeichnisserver (1200, 1201, 1202),
- mindestens einen E-Mail-Home-Server (1300, 1301, 1302), der ein privates Managementbüro (1310, 1311, 1312) für jeden Benutzer umfasst, insbesondere zum Auswählen mindestens einer E-Mail-Gegenstelle, Validieren des Inhalts der zu versendenden Mail und Speichern der Mail nach dem Versenden,
- mindestens einen Server zum Verarbeiten der Mails (1700, 1701, 1702) und mindestens einen Server zum Zertifizieren von E-Mails (1500, 1501, 1502),
wobei das System **dadurch gekennzeichnet ist, dass**:
- der mindestens eine Home-Server (1300, 1301, 1302) außerdem mindestens ein E-Mail-Sitzungs-Managementmodul (1340, 1341, 1342) umfasst, das mindestens ein Submodul zum Autorisieren des Eröffnens einer Sitzung zwischen einem Benutzer (1101, 1102) und seinem privaten Managementbüro (1310, 1311, 1312) umfasst, vorbehaltlich der Verifizierung nach Anforderung vor der Eröffnung bei mindestens einem Zertifizierungsserver (1500, 1501, 1502), dass die Summe der Bewertungen der digitalen Identitäten des Benutzers (1101, 1102) und seiner Gegenstelle (1102, 1101) größer als ein Schwellenwert ist, der von einem den mindestens einen Zertifizierungsserver (1500, 1501, 1502) verwaltenden Mail-Zertifizierungsdienstanbieter, PSC-COR, festgelegt wurde;
- und dadurch, dass das Login-Submodul zum Ausführen einer Funktion der starken Authentifizierung eines Benutzers des Systems durch Verifizieren der Identität eines vom Benutzer an den Home-Server gelieferten Codes mit einem einmaligen Geheimnis konfiguriert ist, das in zwei verschiedenen Formen vom Zertifizierungsserver übertragen wird, einerseits an den Home-Server und andererseits an den Benutzer, wobei diese zweite Übertragung auf einem anderen Kommunikationskanal erfolgt als dem, über den der Benutzer an den Verwaltungsserver angeschlossen ist, wobei der Ausgang der starken Authentifizierungsfunktion eine Voraussetzung für die Fortsetzung der Eröffnung der Sitzung ist.

2. System zum Verwalten sicherer E-Mail-Sitzungen nach Anspruch 1, wobei die Authentifizierungsfunktion das Geheimnis an den Home-Server in Form einer Information überträgt, die auf der Basis des vom Zertifizierungsserver erzeugten Geheimnisses und von mindestens einem für die zu eröffnenden Sitzung charakteristischen Datenelement berechnet wird, das vom Home-Server erzeugt und an den Zertifizierungsserver übertragen wird.

3. System zum Verwalten sicherer E-Mail-Sitzungen nach Anspruch 2, wobei die Information eine Anmeldenummer ist, die an die Sitzung angehängt und durch Erzeugen des Produkts aus dem Geheimnis und einer Sequenznummer der zu eröffnenden Sitzung berechnet wird.

4. System zum Verwalten sicherer E-Mail-Sitzungen nach einem der Ansprüche 1 bis 3, wobei der sendende Benutzer mindestens einen empfangenden Benutzer einladen kann, sich auf einem Home-Server zu registrieren, der in einer Liste vorgeschlagen wird, die mindestens ein Element umfasst.

5. System zum Verwalten sicherer E-Mail-Sitzungen nach Anspruch 4, das ferner ein Modul zum Registrieren eingeladener Benutzer umfasst, wobei das Modul dem eingeladenen Benutzer die Möglichkeit bietet, zumindest Informationen bezüglich seiner physischen und elektronischen Identifikations- und Adressierungsattribute inklusive mindestens einer Mobiltelefonnummer zu geben.

6. System zum Verwalten sicherer E-Mail-Sitzungen nach Anspruch 4, wobei das Registrierungsmodul dem Benutzer ferner die Möglichkeit bietet, an eine von dem gewählten Home-Server vorgeschlagene universelle Mail-Konvention und eine von dem einladenden Benutzer vorgeschlagene bilaterale Mail-Konvention einzuhalten.

7. System zum Verwalten sicherer E-Mail-Sitzungen nach einem der Ansprüche 4 bis 6, wobei das Registrierungsmodul dem Benutzer während der Registrierung ferner vorschlägt, materielle Nachweise für mindestens einen Teil der von ihm an das Modul gelieferten Identifikations- und Adressierungsinformationen zu geben, und seine Registrierung erst nach Erhalt und Kontrolle der Übereinstimmung der Nachweise mit den dem Modul gegebenen Informationen akzeptiert.

8. System zum Verwalten sicherer E-Mail-Sitzungen nach einem der Ansprüche 1 bis 7, wobei der Zertifizierungsserver eine Datenbank von nicht abgelehnten elektronischen Signaturen von Benutzern, Home-Operatoren, Verarbeitungsoperatoren und Zertifizierungsoperatoren umfasst, wobei die Datenbank bei sendenden Anbietern von Signaturen mit einer Häufigkeit aktualisiert wird, die in Abhängigkeit von einer Signaturrückweisungsstatistik und einer E-Mail-Flussstatistik berechnet wird.

9. System zum Verwalten sicherer E-Mail-Sitzungen nach einem der Ansprüche 1 bis 8, wobei das Sitzungsmanagementmodul ferner ein Submodul zum Verwalten von an das private Managementbüro eines Benutzers zu sendenden Mail-Zustellungen umfasst.

10. System zum Verwalten sicherer E-Mail-Sitzungen nach Anspruch 9, wobei das Zustellungsmanagement-Submodul zum Verweigern einer Mail-Zustellung konfiguriert ist, wenn ein Bewertungskriterium des Sender/Empfänger-Paares der Mail niedriger ist als ein vom Zertifizierungsoperator vorgeschriebener Bewertungsschwellenwert.

11. System zum Verwalten sicherer E-Mail-Sitzungen nach Anspruch 9, wobei das Zustellungsmanagement-Submodul eine Funktion zum Erzeugen einer konsolidierten Mail-Ordnungstabelle umfasst, die für jeden Empfänger dessen gültige Adressierungsdaten, die Referenzen der zu sendenden gültigen Dateien und die Ordnungsnummern jeder Mail-Zeile zusammenfasst.

12. System zum Verwalten sicherer E-Mail-Sitzungen nach Anspruch 11, wobei das Zustellungsmanagement-Submodul am Ausgang der Funktion zum Erzeugen einer konsolidierten Mail-Ordnungstabelle eine Funktion zum Bearbeiten eines Protokolls mit Erzeugungszeitstempel umfasst.

13. System zum Verwalten sicherer E-Mail-Sitzungen nach Anspruch 11, wobei das Zustellungsmanagement-Submodul am Ausgang der Funktion zum Erzeugen einer konsolidierten Mail-Ordnungstabelle eine Funktion zum Senden einer Nachricht an den Zertifizierungsserver, wobei die Nachricht die konsolidierte Mail-Ordnungstabelle umfasst, und dann eine Funktion zum Empfangen einer Nachricht vom Zertifizierungsserver umfasst, wobei die Nachricht eine vom Zertifizierungsserver korrigierte und validierte konsolidierte Mail-Ordnungstabelle umfasst.

14. System zum Verwalten sicherer E-Mail-Sitzungen nach Anspruch 9, wobei das Zustellungsmanagement-Submodul eine Funktion zum Verwalten von Token zum Zertifizieren der Ausführung von Verarbeitungsoperationen umfasst, die an jeder E-Mail durchzuführen sind.

15. System zum Verwalten sicherer E-Mail-Sitzungen nach Anspruch 14, wobei die Funktion zum Verwalten von Zertifizierungs-Token zum Empfangen der Token vom Zertifizierungsserver in einer Matrix mit dokumentarischem Beweiswert zum Home-Server konfiguriert ist, wobei die Matrix alle Token umfasst, die für die Zertifizierung von Mails erforderlich sind, die während der aktuellen Sitzung vom Zertifizierungsoperator gesendet oder empfangen wurden.

16. System zum Verwalten sicherer E-Mail-Sitzungen nach Anspruch 15, wobei die Zertifizierungs-Token-Verwaltungsfunktion zum Leiten der empfangenen Tokens an die Verarbeitungsoperatoren konfiguriert ist.

17. System zum Verwalten sicherer E-Mail-Sitzungen nach Anspruch 16, wobei die Zertifizierungs-Token-Managementfunktion zum Empfangen einer Nachricht vom Zertifizierungsserver konfiguriert ist, die die Zertifizierungs-Token von Verarbeitungsoperationen enthält, die gemäß Spezifikationen des Zertifizierungsoperators stattgefunden haben.

18. System zum Verwalten sicherer E-Mail-Sitzungen nach einem der Ansprüche 1 bis 17, wobei das Sitzungsmanagementmodul ferner ein Submodul zum Validieren durch den Benutzer oder einen von ihm zum Senden von E-Mails an seine Empfänger bestimmten Bevollmächtigten umfasst.

19. System zum Verwalten sicherer E-Mail-Sitzungen nach Anspruch 18, wobei das Validierungssubmodul eine Funktion zum Editieren eines Validierungsprotokolls enthält, das die Vollständigkeit der vor der Validierung durchgeführten Kontrollen anzeigt.

20. System zum Verwalten sicherer E-Mail-Sitzungen nach Anspruch 18, wobei das Validierungssubmodul eine Funktion zum Editieren einer Validierungstabelle vertrauenswürdiger Attribute jedes empfangenden Benutzers umfasst.

21. System zum Verwalten einer sicheren E-Mail-Sitzung nach einem der Ansprüche 18 bis 20, wobei das Validierungssubmodul eine Funktion zum Versiegeln der E-Mails umfasst.

22. System zum Verwalten sicherer E-Mail-Sitzungen nach einem der Ansprüche 1 bis 21, wobei das Sitzungsmanagementmodul ferner ein Submodul zum Verwalten von E-Mail-Empfangsbestätigungen umfasst.

23. System zum Verwalten sicherer E-Mail-Sitzungen nach einem der Ansprüche 1 bis 22, wobei das Sitzungsmanagementmodul ferner ein Submodul zum Verwalten von Kommunikationen zwischen Benutzern des Systems umfasst, wobei das Modul zum Auswählen eines sicheren Leitwegs auf der Basis von Informationen in Bezug auf den Home-Server und den Zertifizierungsserver konfiguriert ist, von dem die sendenden Benutzer, die empfangenden Benutzer, die Operatoren zum Verarbeiten der E-Mails und die Zertifizierungsoperatoren Abonnenten sind.

24. System zum Verwalten sicherer E-Mail-Sitzungen nach Anspruch 23, wobei das Submodul zum Verwalten von Kommunikationen zwischen Benutzern des Systems konfiguriert ist zum Produzieren einer Auswahl zwischen einem ersten Leitwegtyp, wenn ein Sender und ein Empfänger einen einzigen Home-Operator, einen einzigen Verarbeitungsoperator und einen einzigen Zertifizierungsoperator verwenden, und einem zweiten Leitwegtyp, wenn ein Sender und ein Empfänger mindestens zwei Home-Server, einen einzigen Bearbeitungsoperator und einen einzigen Zertifizierungsoperator verwenden, einem dritten Leitwegtyp, wenn ein Sender und ein Empfänger mindestens zwei verschiedene Home-Server, mindestens zwei Verarbeitungsoperatoren und einen einzigen Zertifizierungsoperator verwenden, und einem vierten Leitwegtyp für verschiedene Zertifizierungsserver, wenn ein Sender und ein Empfänger mindestens zwei verschiedene Home-Server, mindestens zwei Bearbeitungsoperatoren und mindestens zwei Zertifizierungsoperatoren verwenden.

25. Verfahren zum Verwalten sicherer E-Mail-Sitzungen zwischen mindestens einem sendenden Benutzer (1101) und mindestens einem empfangenden Benutzer (1102), wobei das Verfahren Folgendes beinhaltet:
- einen Schritt des Anschließens an mindestens einen Verzeichnisserver (1200, 1201, 1202),
- mindestens einen Schritt des Anschließens an einen E-Mail-Home-Server (1300, 1301, 1302), wobei der E-Mail-Home-Server ein privates Managementbüro (1310, 1311, 1312) für jeden Benutzer umfasst, insbesondere zum Auswählen mindestens einer Mail-Gegenstelle, mindestens einen Schritt des Verarbeitens der Mails (1700, 1701, 1702) zum Validieren des Inhalts der zu sendenden Mail und zum Speichern der Mail nach dem Senden, und
- mindestens einen Schritt des Anschließens des Home-Servers an den E-Mail-Zertifizierungsserver (1500, 1501, 1502),
wobei das Verfahren **dadurch gekennzeichnet ist, dass**:
- der Schritt des Anschließens an den Home-Server (1300, 1301, 1302) ferner mindestens einen Schritt des Verwaltens von E-Mail-Sitzungen beinhaltet, der mindestens einen Teilschritt des Autorisierens des Eröffnens einer Sitzung zwischen einem Benutzer (1101, 1102) und seinem privaten Managementbüro (1310, 1311, 1312) vorbehaltlich der Verifizierung durch Anforderung vor der Eröffnung bei mindestens einem Zertifizierungsserver (1500, 1501, 1502) beinhaltet, dass die Summe der Bewertungen der digitalen Identitäten des Benutzers (1101, 1102) und seiner Gegenstelle (1102, 1101) größer ist als ein Schwellenwert, der von einem Mail-Zertifizierungsdienstanbieter, PSC-COR, festgelegt wurde, der den mindestens einen Zertifizierungsserver (1500, 1501, 1502) verwaltet;
- und dadurch, dass der Login-Autorisierungsteilschritt einen Teilschritt zum Ausführen einer Funktion einer starken Authentifizierung eines Benutzers des Systems durch Verifizieren der Identität eines von dem Benutzer an den Home-Server gelieferten Codes mit einem einmaligen Geheimnis umfasst, das in zwei verschiedenen Formen vom Zertifizierungsserver übertragen wird, einerseits an den Home-Server und andererseits an den Benutzer, wobei diese zweite Übertragung auf einem anderen Kommunikationskanal erfolgt als die, über den sich der Benutzer an den Verwaltungsserver anschließt, wobei der Ausgang der starken Authentifizierungsfunktion eine Voraussetzung für die Fortsetzung der Eröffnung der Sitzung ist.

26. Verfahren zum Verwalten sicherer E-Mail-Sitzungen nach Anspruch 25, wobei der Schritt des Verwaltens von E-Mail-Sitzungen ferner einen Teilschritt des Verwaltens von an ein privates Managementbüro eines Benutzers zu sendenden Mail-Zustellungen beinhaltet.

27. Verfahren zur Verwaltung sicherer E-Mail-Sitzungen nach Anspruch 25, wobei der Schritt des Verwaltens von E-Mail-Sitzungen ferner einen Teilschritt des Validierens durch den Benutzer oder einen von ihm zum Senden der E-Mails an seine Empfänger bestimmten Bevollmächtigten umfasst.

28. Verfahren zum Verwalten sicherer E-Mail-Sitzungen nach Anspruch 25, wobei der Schritt des Verwaltens von E-Mail-Sitzungen ferner einen Teilschritt des Verwaltens von Kommunikationen zwischen Benutzern des Systems beinhaltet, wobei der Teilschritt zum Auswählen eines sicheren Leitwegs auf der Basis von Informationen in Bezug auf den Home-Server und den Zertifizierungsserver konfiguriert ist, von denen die sendenden Benutzer, die empfangenden Benutzer, die die E-Mails verarbeitenden Operatoren und die Zertifizierungsoperatoren Abonnenten sind.

## Claims

1. A system for managing sessions of secure electronic correspondence between at least one sending user (1101) and at least one receiving user (1102), said system comprising:
- at least one directory server (1200, 1201, 1202);
- at least one electronic correspondence domiciliation server (1300, 1301, 1302) comprising a private management office (1310, 1311, 1312) for each user, particularly for choosing at least one correspondence counterpart, validating the content of the item of correspondence to be sent and storing the item of correspondence once sent;
- at least one server for processing said items of correspondence (1700, 1701, 1702), and at least one electronic correspondence certification server (1500, 1501, 1502),
said system being **characterized in that**:
- said at least one domiciliation server (1300, 1301, 1302) further comprises at least one electronic correspondence sessions management module (1340, 1341, 1342) comprising at least one authorization submodule for the opening of a session between a user (1101, 1102) and his private management office (1310, 1311, 1312) on condition of verifying by request, before said opening, with at least one certification server (1500, 1501, 1502) that the sum of the scores of the digital identities of said user (1101, 1102) and of its counterpart (1102, 1101) exceeds a threshold set by a correspondence certification service provider, PSC-COR, which manages said at least one certification server (1500, 1501, 1502);
- and **in that** said authorization submodule for the opening of a session is configured to execute a strong authentication function of a user of said system by verifying the matching of a code provided by the user to the domiciliation server with a single secret transmitted in two different forms by the certification server, on one hand to the domiciliation server and on the other hand to said user, this second transmission being over a communication channel which is different from that by which the user connects to the management server, the output of the strong authentication function conditioning a continuation of the opening of the session.

2. The system for managing sessions of secure electronic correspondence according to claim 1, wherein said authentication function transmits said secret to the domiciliation server in the form of an item of information computed from said secret generated by the certification server and of at least one data item characteristic for the session being opened created by the domiciliation server and transmitted to the certification server.

3. The system for managing sessions of secure electronic correspondence according to claim 2, wherein said item of information is an enrolment number attached to said session and computed as a product of said secret and of a sequence number of the session being opened.

4. The system for managing sessions of secure electronic correspondence according to one of claims 1 to 3, wherein the sending user can invite at least one receiving user to register on a domiciliation server proposed in a list comprising at least one element.

5. The system for managing sessions of secure electronic correspondence according to claim 4, further comprising an invited-users registration module, said module offering said invited user the option of providing at least information relating to his identification attributes and to his physical and electronic address attributes having at least one mobile telephone number.

6. The system for managing sessions of secure electronic correspondence according to claim 4, wherein said registration module further offers the user the option of adhering to a universal correspondence convention proposed by the selected domiciliation server and to a bilateral correspondence convention proposed by the inviting user.

7. The system for managing sessions of secure electronic correspondence according to one of claims 4 to 6, wherein said registration module further proposes the registering user to provide material proofs of at least a portion of the identification and address information that he has provided to said module and only accepts his registration after receiving the proofs and checking that they conform to the information provided to said module.

8. The system for managing sessions of secure electronic correspondence according to one of claims 1 to 7, wherein the certification server comprises a database of the non-repudiated electronic signatures of the users, of the domiciliation operators, of the processing operators and of the certification operators, said database being updated with the service providers sending said signatures at a frequency computed as a function of a statistic of repudiation of said signatures and of a statistic of electronic correspondence flow.

9. The system for managing sessions of secure electronic correspondence according to one of claims 1 to 8, wherein said sessions management module further comprises a submodule for managing the handovers of correspondence to be sent to the private management office of a user.

10. The system for managing sessions of secure electronic correspondence according to claim 9, wherein said submodule for managing handovers is configured to refuse a handover of correspondence if a scoring criterion of the sender/receiver pair of said item of correspondence is below a scoring threshold prescribed by the certification operator.

11. The system for managing sessions of secure electronic correspondence according to claim 9, wherein said submodule for managing handovers comprises a function of creating a consolidated correspondence sequence table containing, for each recipient, their validated address data, references of the validated files to be sent, the sequence numbers of each line of correspondence.

12. The system for managing sessions of secure electronic correspondence according to claim 11, wherein said submodule for managing handovers comprises, at the output of said function for creating a consolidated correspondence sequence table, a function for outputting a date-stamped log of validation of said creation.

13. The system for managing sessions of secure electronic correspondence according to claim 11, wherein said submodule for managing handovers comprises, at the output of the function for creating a consolidated correspondence sequence table, a function for sending a message to the certification server, said message comprising said consolidated correspondence sequence table, then a function for receiving a message from said certification server, said message comprising a consolidated correspondence sequence table corrected and validated by said certification server.

14. The system for managing sessions of secure electronic correspondence according to claim 9, wherein said submodule for managing handovers comprises a function for managing tokens for certifying the execution of processing operations to be carried out on each item of electronic correspondence.

15. The system for managing sessions of secure electronic correspondence according to claim 14, wherein said function for managing certification tokens is configured to receive said tokens from the certification server in a matrix of documentary probative value at the domiciliation server, said matrix comprising all the tokens necessary for the certification of the items of correspondence sent or received during the current session by the certification operator.

16. The system for managing sessions of secure electronic correspondence according to claim 15, wherein said function for managing certification tokens is configured to route the received tokens to the processing operators.

17. The system for managing sessions of secure electronic correspondence according to claim 16, wherein said function for managing certification tokens is configured to receive, from the certification server, a message comprising the certification tokens of the processing operations that have been carried out in conformity with the specifications of the certification operator.

18. The system for managing sessions of secure electronic correspondence according to one of claims 1 to 17, wherein said sessions management module further comprises a submodule for validation, by the user or an agent designated by him, of the sending of the electronic correspondence to his recipients.

19. The system for managing sessions of secure electronic correspondence according to claim 18, wherein said validation submodule comprises a function for outputting a validation log indicating the completeness of the checks carried out before validation.

20. The system for managing sessions of secure electronic correspondence according to claim 18, wherein said validation submodule comprises a function for outputting a table of validation of the trust attributes of each receiving user.

21. The system for managing sessions of secure electronic correspondence according to one of claim 18 to 20, wherein said validation submodule comprises a function for sealing said electronic correspondence.

22. The system for managing sessions of secure electronic correspondence according to one of claims 1 to 21, wherein said sessions management module further comprises a submodule for managing acknowledgements of receipt of the electronic correspondence.

23. The system for managing sessions of secure electronic correspondence according to one of claims 1 to 22, wherein said sessions management module further comprises a submodule for managing communications between users of said system, said module being configured to make a choice of secure routing path based on information relating to the domiciliation server and to the certification server of which the sending users, the receiving users, the operators for processing said electronic correspondence and the certification operators are subscribers.

24. The system for managing sessions of secure electronic correspondence according to claim 23, wherein said submodule for managing communications between users of said system is configured to produce a choice between a first type of routing paths when a sender and a receiver use a single domiciliation operator, a single processing operator and a single certification operator, a second type of routing paths when a sender and a receiver use at least two domiciliation servers, a single processing operator and a single certification operator, a third type of routing paths when a sender and a receiver use at least two different domiciliation servers, at least two processing operators and a single certification operator, and a fourth type of routing paths for different certification servers when a sender and a receiver use at least two different domiciliation servers, at least two processing operators and at least two certification operators.

25. A method for managing sessions of secure electronic correspondence between at least one sending user (1101) and at least one receiving user (1102), said method comprising:
- a step of connecting to at least one directory server (1200, 1201, 1202);
- at least one step of connecting to an electronic correspondence domiciliation server (1300, 1301, 1302), said electronic correspondence domiciliation server comprising a private management office (1310, 1311, 1312) for each user, in particular for choosing at least one correspondence counterpart, at least one step of processing said items of correspondence (1700, 1701, 1702) for validating the content of the correspondence to be sent and storing the correspondence once sent; and
- at least one step of connecting the domiciliation server to the electronic correspondence certification server (1500, 1501, 1502),
said method being **characterized in that**:
- said step of connecting to the domiciliation server (1300, 1301, 1302) further comprises at least one step of managing electronic correspondence sessions comprising at least one sub-step of authorizing the opening of a session between a user (1101, 1102) and his private management office on condition of verifying by request, before said opening, with at least one certification server (1500, 1501, 1502) that the sum of the scores of the digital identities of said user (1101, 1102) and of its counterpart (1102, 1101) exceeds a threshold set by a correspondence certification service provider, PSC-COR, which manages said at least one certification server (1500, 1501, 1502);
- and **in that** said sub-step of authorizing the opening of a session comprises a sub-step of executing a strong authentication function of a user of said system by verifying the matching of a code provided by said user to said domiciliation server with a single secret transmitted in two different forms by the certification server, on one hand to the domiciliation server and on the other hand to the user, this second transmission being over a communication channel which is different from that by which the user connects to the management server, said output of said strong authentication function being a condition of a continuation of the opening of the session.

26. The method for managing sessions of secure electronic correspondence according to claim 25, wherein said step of managing sessions of electronic correspondence further comprises a sub-step of managing handovers of correspondence to be sent to the private management office of a user.

27. The method for managing sessions of secure electronic correspondence according to claim 25, wherein said step of managing sessions of electronic correspondence further comprises a sub-step of validation, by the user or an agent designated by him, of the sending of the electronic correspondence to his recipients.

28. The method for managing sessions of secure electronic correspondence according to claim 25, wherein said step of managing sessions of electronic correspondence further comprises a sub-step of managing communications between users of said system, said sub-step being configured to make a choice of secure routing path based on information relating to the domiciliation server and to the certification server of which the sending users, the receiving users, the operators for processing said electronic correspondence and the certification operators are subscribers.
